(19) Europäisches Patentamt
European Patent Office
Office européen des brevets

(11) EP 4 471 101 A1

(12) # EUROPEAN PATENT APPLICATION
published in accordance with Art. 153(4) EPC

(43) Date of publication:
**04.12.2024 Bulletin 2024/49**

(21) Application number: **23746718.8**

(22) Date of filing: **16.01.2023**

(51) International Patent Classification (IPC):
***C09J 7/30*** *(2018.01)* ***B32B 27/00*** *(2006.01)*
***C09J 5/08*** *(2006.01)* ***C09J 11/06*** *(2006.01)*
***C09J 201/00*** *(2006.01)*

(52) Cooperative Patent Classification (CPC):
**B32B 27/00; C09J 5/08; C09J 7/30; C09J 9/00; C09J 11/06; C09J 201/00**

(86) International application number:
**PCT/JP2023/000950**

(87) International publication number:
**WO 2023/145504 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.01.2022 JP 2022009644**

(71) Applicant: **Dai Nippon Printing Co., Ltd.**
**Tokyo 162-8001 (JP)**

(72) Inventors:
- **MORIOKA, Yutaka**
  **Tokyo 162-8001 (JP)**
- **SEGAWA, Toshikazu**
  **Tokyo 162-8001 (JP)**
- **HOSHI, Kentaro**
  **Tokyo 162-8001 (JP)**
- **MAEDA, Nao**
  **Tokyo 162-8001 (JP)**

(74) Representative: **Beck Greener LLP**
**Fulwood House**
**12 Fulwood Place**
**London WC1V 6HR (GB)**

(54) **FOAMING ADHESIVE SHEET AND ARTICLE MANUFACTURING METHOD**

(57) Provided is a foaming adhesive sheet that is disposed between a first member and a second member, and is used for adhering the first member and the second member, the foaming adhesive sheet including: a first adhesive layer containing a curable adhesive agent and a foaming agent, and a second adhesive layer that is disposed on one surface side of the first adhesive layer, contains a curable adhesive agent, and does not contain a foaming agent, wherein a tack of the fist adhesive layer and the second adhesive layer is 0 gf or more and less than 10 gf; and when the foaming adhesive sheet is foamed and cured so that a thickness, which is from a surface of the first adhesive layer opposing to the second adhesive layer to a surface of the second adhesive layer opposing to the first adhesive layer, becomes a distance between the first member and the second member, a thickness of the first adhesive layer and the thickness, which is from the surface of the first adhesive layer opposing to the second adhesive layer to the surface of the second adhesive layer opposing to the first adhesive layer, are set so that a foaming ratio E represented by the below equation (1) is over 1.0 and 8.5 or less.

FIG. 1

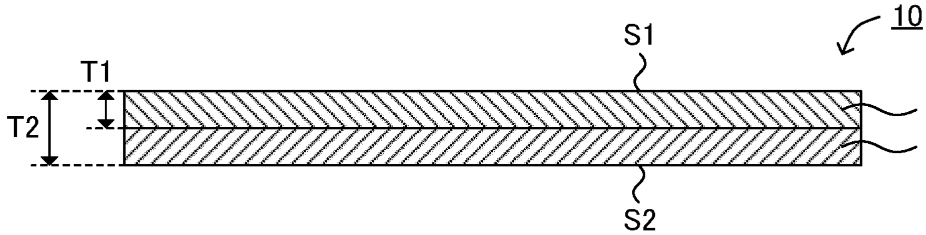




Processed by Luminess, 75001 PARIS (FR)

## Description

### Technical Field

The present disclosure relates to a foaming adhesive sheet and a method for producing a product using the same.

### Background Art

An adhesive agent adhering materials has been widely used in a variety of fields, and various methods for adhering have also been known. For example, an adhering method using a liquid adhesive agent has been known. However, in the case of the liquid adhesive agent, there are problems such that coating unevenness, extrusion, liquid dripping and the like occur to complicate the adhering step.

Meanwhile, in recent years, instead of the liquid adhesive agent, usage of a sheet-shaped adhesive agent (foaming adhesive sheet) containing a foaming agent has been suggested (for example, see Patent Document 1). With the foaming adhesive sheet, the above described occurrence of defect in the case of the liquid adhesive agent can be inhibited.

### Citation List

### Patent Document

Patent Document 1: Japanese Patent No. 6274540

### Summary

### Technical Problem

As an application method for the foaming adhesive agent, for example, a method in which a foaming adhesive sheet is disposed between two members, and then the foaming adhesive sheet is foamed and cured to adhere the two members, has been known. In such a foaming adhesive sheet, desired properties are such that the adhesion after forming and curing is well, and for example, the foaming adhesive sheet can be easily inserted between a space between the two members, and after disposing the foaming adhesive sheet in a hole or a groove of one member, the other member is easily inserted into the hole or the groove of the one member on which the foaming adhesive sheet is disposed.

The present disclosure has been made in view of the above circumstances, and a main object thereof is to provide a foaming adhesive sheet with excellent adhesion after foamed and cured and excellent insertion.

### Solution to Problem

The first embodiment of the present disclosure provides a foaming adhesive sheet that is disposed between a first member and a second member, and is used for adhering the first member and the second member, the foaming adhesive sheet including: a first adhesive layer containing a curable adhesive agent and a foaming agent, and a second adhesive layer that is disposed on one surface side of the first adhesive layer, contains a curable adhesive agent, and does not contain a foaming agent, wherein a tack of the fist adhesive layer and the second adhesive layer is 0 gf or more and less than 10 gf; and when the foaming adhesive sheet is foamed and cured so that a thickness, which is from a surface of the first adhesive layer opposing to the second adhesive layer to a surface of the second adhesive layer opposing to the first adhesive layer, becomes a distance between the first member and the second member, a thickness of the first adhesive layer and the thickness, which is from the surface of the first adhesive layer opposing to the second adhesive layer to the surface of the second adhesive layer opposing to the first adhesive layer, are set so that a foaming ratio E represented by the below equation (1) is over 1.0 and 8.5 or less.

$$E = (G1 - T2) / T1 \qquad (1)$$

(In the equation (1), E represents a foaming ratio, G1 represents the distance between the first member and the second member, T1 represents a thickness of the first adhesive layer before foamed and cured, T2 represents a thickness, which is from the surface of the first adhesive layer opposing to the second adhesive layer to the surface of the second adhesive layer opposing to the first adhesive layer, before foamed and cured.)

Another embodiment of the present disclosure provides a method for producing a product, the method including:

a disposing step of disposing the above described foaming adhesive sheet between a first member and a second member; and an adhering step of adhering the first member and the second member by foaming and curing the foaming adhesive sheet.

Advantageous Effects

The foaming adhesive sheet in the present disclosure exhibits effects such that the adhesion after foamed and cured is well, and the insertion is excellent.

Brief Description of Drawings

FIG. 1 is a schematic cross-sectional view exemplifying the foaming adhesive sheet in the present disclosure.
FIGS. 2A and 2B are process charts exemplifying the method for producing the product in the present disclosure.
FIG. 3 is a schematic cross-sectional view exemplifying the foaming adhesive sheet in the present disclosure.
FIGS. 4A and 4B are process charts exemplifying the method for producing the product in the present disclosure.
FIGS. 5A to 5D are process charts exemplifying the method for producing the product in the present disclosure.
FIG. 6 is a schematic cross-sectional view exemplifying the foaming adhesive sheet in the present disclosure.
FIG. 7 is a schematic cross-sectional view explaining a test method of adhesion of the foaming adhesive sheet after foamed and cured.

Description of Embodiments

An embodiment of the present disclosure is explained as below with reference to, for example, drawings. However, the present disclosure is enforceable in a variety of different forms, and thus should not be taken as is limited to the contents described in the embodiment exemplified as below. Also, the drawings may show the features of the invention such as width, thickness, and shape of each part schematically in order to explain the invention more clearly in some cases comparing to the actual form; however, it is merely an example, and thus does not limit the interpretation of the present disclosure. Also, in the present description and each drawing, for the factor same as that described in the figure already explained, the same reference sign is indicated and the explanation thereof may be omitted.

In the present description, upon expressing an aspect of arranging one member on the other member, when it is expressed simply "on" or "below", both of when the other member is directly arranged on or below the one member so as to contact with each other, and when the other member is arranged on or below the one member further interposing an additional member, can be included unless otherwise described. Furthermore, in the present description, upon expressing an aspect of arranging the other member in a surface of one member, when expressed simply "in a surface side" or "in a surface", both of when the other member is directly arranged on or below the one member so as to contact with each other, and when the other member is arranged on or below the one member further interposing an additional member, can be included unless otherwise described.

Also, in the present description, a "sheet" includes a member called a "film". Also, the "film" includes a member called a "sheet".

A foaming adhesive sheet, and a method for producing a product using the same in the present disclosure will be hereinafter described in details.

A. Foaming adhesive sheet

The foaming adhesive sheet in the present disclosure is a foaming adhesive sheet that is disposed between a first member and a second member, and is used for adhering the first member and the second member, the foaming adhesive sheet includes: a first adhesive layer containing a curable adhesive agent and a foaming agent, and a second adhesive layer that is disposed on one surface side of the first adhesive layer, contains a curable adhesive agent, and does not contain a foaming agent, wherein a tack of the fist adhesive layer and the second adhesive layer is 0 gf or more and less than 10 gf; and when the foaming adhesive sheet is foamed and cured so that a thickness, which is from a surface of the first adhesive layer opposing to the second adhesive layer to a surface of the second adhesive layer opposing to the first adhesive layer, becomes a distance between the first member and the second member, a thickness of the first adhesive layer and the thickness, which is from the surface of the first adhesive layer opposing to the second adhesive layer to the surface of the second adhesive layer opposing to the first adhesive layer, are set so that a foaming ratio E represented by the below equation (1) is over 1.0 and 8.5 or less.

$$E = (G1 - T2) / T1 \quad (1)$$

(In the equation (1), E represents a foaming ratio, G1 represents the distance between the first member and the second member, T1 represents a thickness of the first adhesive layer before foamed and cured, T2 represents a thickness, which is from the surface of the first adhesive layer opposing to the second adhesive layer to the surface of the second adhesive layer opposing to the first adhesive layer, before foamed and cured.)

FIG. 1 is a schematic cross-sectional view exemplifying the foaming adhesive sheet in the present disclosure. Foaming adhesive sheet 10 in FIG. 1 includes first adhesive layer 1, and second adhesive layer 2 disposed on one surface side of the first adhesive layer 1. The first adhesive layer 1 contains a curable adhesive agent, and a foaming agent. Meanwhile, the second adhesive layer 2 contains a curable adhesive agent, and does not contain a foaming agent. Also, a tack of the first adhesive layer 1 and a tack of the second adhesive layer 2 are respectively the specified value or less.

Also, the foaming adhesive sheet in the present disclosure is, when distance G2 of a space after disposing the foaming adhesive sheet between the first member and the second member is in the specified range, disposed between the first member and the second member, and is used for adhering the first member and the second member. Here, the distance G2 of the space after disposing the foaming adhesive sheet between the first member and the second member can be represented by the following equation:

$$G2 = G1 - T2.$$

That is, the equation (1) is represented by the following equation:

$$E = (G1 - T2) / T1 = G2 / T1.$$

FIGS. 2A to 2B are process charts exemplifying the method for producing the product using the foaming adhesive sheet in the present disclosure, and is an example using the foaming adhesive sheet exemplified in FIG. 1. First, as shown in FIG. 2A, foaming adhesive sheet 10 is disposed between first member 20a and second member 20b. At this time, the distance G2 of the space after disposing the foaming adhesive sheet 10 between the first member 20a and the second member 20b is in the specified range. Next, as shown in FIG. 2B, the first adhesive layer 1 of the foaming adhesive sheet 10 is foamed and cured as well as the second adhesive layer 2 is cured. The first member 20a and the second member 20b are adhered (bonded) by adhesive sheet 15 after foamed and cured. Thereby, product 100 in which the adhesive sheet 15 is disposed between the first member 20a and the second member 20b is obtained.

In the foaming adhesive sheet 10 in FIG. 1, for example, as shown in FIGS. 2A to 2B, when the foaming adhesive sheet 10 is foamed and cured so that a thickness, which is from surface S1 of the first adhesive layer 1 opposing to the second adhesive layer 2 to surface S2 of the second adhesive layer 2 opposing to the first adhesive layer 1, becomes distance G1 between the first member 20a and the second member 20b, thickness T1 of the first adhesive layer and thickness T2, which is from the surface S1 of the first adhesive layer 1 opposing to the second adhesive layer 2 to the surface S2 of the second adhesive layer 2 opposing to the first adhesive layer 1, are set so that a foaming ratio E represented by the above equation (1) is in the specified range.

The foaming adhesive sheet in the present disclosure may further include, for example, as shown in FIG. 3, substrate 3 between the first adhesive layer 1 and the second adhesive layer 2. FIGS. 4A to 4B are process charts exemplifying the method for producing the product using the foaming adhesive sheet in the present disclosure, and is an example using the foaming adhesive sheet exemplified in FIG. 3. Note that FIGS. 4A to 4B can be the same as FIGS. 2A to 2B described above.

In the foaming adhesive sheet 10 in FIG. 3, similarly to the foaming adhesive sheet in FIG. 1 described above, for example, as shown in FIGS. 4A to 4B, when the foaming adhesive sheet 10 is foamed and cured so that a thickness, which is from surface S1 of the first adhesive layer 1 opposing to the second adhesive layer 2 to surface S2 of the second adhesive layer 2 opposing to the first adhesive layer 1, becomes distance G1 between the first member 20a and the second member 20b, thickness T1 of the first adhesive layer 1 and thickness T2, which is from the surface S1 of the first adhesive layer 1 opposing to the second adhesive layer 2 to the surface S2 of the second adhesive layer 2 opposing to the first adhesive layer 1, are set so that a foaming ratio E represented by the above equation (1) is in the specified range.

Here, in the foaming adhesive sheet, for filling the space between the first member and the second member and adhering the first member and the second member, required foaming properties are such that the thickness of the foaming adhesive sheet after foamed and cured becomes at least equal to or more than the distance G1 between the first member and the second member. However, when the inventors of the present disclosure thoroughly studied about the adhesion of the foaming adhesive sheet after formed and cured, it has been found out that the adhesion of the foaming adhesive sheet after foamed and cured may be degraded depending on relation between the distance G2 of the space after disposing the foaming adhesive sheet between the first member and the second member, and the thickness of the foaming adhesive sheet, even when the foaming adhesive sheet has the above described foaming properties. Then, the inventors of the

present disclosure has found out that the adhesion after foamed and cured can be improved by setting the foaming ratio E represented by the above equation (1) to the specified range when the foaming adhesive sheet is foamed and cured so that a thickness, which is from a surface of the first adhesive layer opposing to the second adhesive layer to a surface of the second adhesive layer opposing to the first adhesive layer, becomes the distance G1, in the case where only the first adhesive layer contains a foaming agent among the first adhesive layer and the second adhesive layer.

When the foaming ratio E is too high, the void of the first adhesive layer after foamed and cured becomes high to degrade the film strength, and thus there is a possibility that the adhesive strength after formed and cured may be degraded. In this case, the adhesive strength of the foaming adhesive sheet after foamed and cured may easily vary, and there is a possibility that an interface fracture between the foaming adhesive sheet after foamed and cured, and the first member or the second member may occur. Meanwhile, in the case where the foaming ratio E is low is, for example, when the thickness T1 of the first adhesive layer before foamed and cured is relatively thick with respect to the distance G2 of the space after disposing the foaming adhesive sheet between the first member and the second member. In such a case, the first adhesive layer may be extruded from the space between the first member and the second member after foamed and cured, and there is a possibility that the extrusion may adhere to unnecessary part of the first member and the second member. In this case, since it is necessary to remove the part of the first adhesive layer extruded from the space between the first member and the second member, and a part of the first adhesive layer extruded may remain as a foreign substance, a defect similar to the case of the liquid adhesive agent occurs.

In contrast, in the present disclosure, the thickness of the first adhesive layer, and the thickness, which is from the surface of the first adhesive layer opposing to the second adhesive layer to the surface of the second adhesive layer opposing to the first adhesive layer, are set so that the foaming ratio E is in the specified range, and thus the film strength of the first adhesive layer after foamed and cured can be improved. Also, the unevenness of the adhesive strength of the foaming adhesive sheet after foamed and cured can be decreased. Thus, the adhesion of the foaming adhesive sheet after foamed and cured can be improved. Also, extrusion of the foaming adhesive sheet from the space between the first member and the second member after foamed and cured can be inhibited. Therefore, in the case where the distance G2 of the space after disposing the foaming adhesive sheet between the first member and the second member is in the specified range, the foaming adhesive sheet can be suitable for filling the space between the first member and the second member, and for adhering the first member and the second member.

Also, in the present disclosure, the tack of the first adhesive layer and the second adhesive layer is in the specified value or less, and thus the first adhesive layer and the second adhesive layer can be substantially non-pressure-sensitive adhesive (tack free), and the foaming adhesive sheet may have excellent slippage. For this reason, for example, when the foaming adhesive sheet is disposed in a space between the first member and the second member, the foaming adhesive sheet can be smoothly inserted into the space between the first member and the second member. Also, for example, after disposing the foaming adhesive sheet in a hole or a groove of the first member, and when the second member is disposed in the hole or the groove of the first member on which the foaming adhesive sheet is disposed, the second member can be smoothly inserted into the hole or the groove of the first member on which the foaming adhesive sheet is disposed. Thereby, problems such as a scratch, a peel-off, a lifting, and a deflection of the foaming adhesive sheet during the insertion can be inhibited. Thus, the degrade in adhesion of the foaming adhesive sheet after foamed and cured due to the problems such as the scratch, the peel-off, the lifting, and the deflection can be inhibited, and also the unevenness of the adhesive strength of the foaming adhesive sheet after foamed and cured due to the problems such as the scratch, the peel-off, the lifting, and the deflection can be decreased.

Therefore, usage of the foaming adhesive sheet in the present disclosure can realize the adhesion with high adhesive strength, high reliability, and high quality.

Also, in the foaming adhesive sheet when both of the first adhesive layer and the second adhesive layer contain a foaming agent, for example, if the thickness of the first adhesive layer and the second adhesive layer is comparatively thick with respect to the distance G2 of the space after disposing the foaming adhesive sheet between the first member and the second member, the foaming adhesive sheet may extrude from the space between the first member and the second member after formed and cured. In this case, since it may be necessary to remove a part of the adhesive sheet extruded from the space between the first member and the second member, and a part of the member of the adhesive sheet extruded from the space between the first member and the second member may remain as a foreign substance, defects similar to the case of the liquid adhesive agent occur.

In contrast, in the present disclosure, among the first adhesive layer and the second adhesive layer, only the first adhesive layer contains the foaming agent, and thus the extrusion of the foaming adhesive sheet from the space between the first member and the second member after foamed and cured can be inhibited. Thus, the adhering step of the first member and the second member can be simplified, and the occurrence of the foreign substance can also be inhibited.

Also, in the present disclosure, as described above, since the slippage of the foaming adhesive sheet is excellent, for example, when the positions of the first member and the second member are matched by moving the second member relative to the first member, the second member can be smoothly moved relative to the first member in a state the foaming adhesive sheet is disposed between the first member and the second member, and the positional matching can be easily

done.

Also, in the present disclosure, the tack of the first adhesive layer and the second adhesive layer is the specified value or less, and the first adhesive layer and the second adhesive layer are substantially non-pressure-sensitive adhesive (tack free), and thus the foaming adhesive sheet with excellent slippage and also excellent blocking resistance can be achieved. Thus, the handling of the foaming adhesive sheet can also be improved.

Here, "pressure-sensitive adhesion" is a concept included in "adhesion". The pressure-sensitive adhesion is used as a meaning of a temporary adhesion phenomenon, whereas the adhesion is distinguished in some cases from a viewpoint that it is used as a meaning of a practically permanent adhesion phenomenon (Physical and Chemical Science Dictionary Fifth Edition, published by Iwanami Shoten). "Pressure-sensitive adhesiveness" and "pressure-sensitive adhesive force" indicate a property to adhere by pressure sensing and the adhesive force at that time.

It should be noted that, in the present specification, "the pressure-sensitive adhesion of the adhesive layer" and "the pressure-sensitive adhesive force of the adhesive layer" refer to the pressure-sensitive adhesion and the pressure-sensitive adhesive force of the adhesive layer before cured, unless otherwise described. Also, in the present specification, "the adhesion of the adhesive layer" and "the adhesive force of the adhesive layer" refer to the adhesion and the adhesive force of the adhesive layer after cured, unless otherwise described.

Each configuration of the foaming adhesive sheet in the present disclosure will be hereinafter explained.

1. Characteristics

In the present disclosure, the tack of the first adhesive layer and the second adhesive layer is respectively 0 gf or more and less than 10 gf, may be 5 gf or less, and may be 2 gf or less. When the tack of the first adhesive layer and the second adhesive layer is in the above range, the first adhesive layer and the second adhesive layer can be substantially non-pressure-sensitive adhesive (tack free), and the foaming adhesive sheet with excellent slippage and blocking resistance can be achieved.

Here, the tack of the first adhesive layer and the second adhesive layer can be measured by a probe tack test in accordance with JIS Z3284-3:2014. As a probe tack test machine, for example, a tacking test machine "TAC-II" from RHESCA CO., LTD can be used. The details of the method for measuring the tack of the first adhesive layer and the second adhesive layer will be described in the section of Examples later.

In the present disclosure, the tack of the first adhesive layer and the second adhesive layer can be in the specified range by, for example, adjusting the compositions of the first adhesive layer and the second adhesive layer. In specific, in the adhesive layer containing an epoxy resin and a curing agent, the pressure-sensitive adhesion of the adhesive layer can be degraded by using the epoxy resin which is solid at a normal temperature, and by using the curing agent which is solid at a normal temperature. Also, in the adhesive layer containing the epoxy resin and the curing agent, the pressure-sensitive adhesion of the adhesive layer can be degraded by including the epoxy resin with high softening temperature, or by including the epoxy resin with large weight average molecular weight. For example, the pressure-sensitive adhesion of the adhesive layer can be degraded by including a plural kinds of epoxy resins with different softening temperature in the adhesive layer, that is when the adhesive layer contains one epoxy resin, and the other epoxy resin of which softening temperature is 25°C or more and is higher in 10°C or more than the softening temperature of the one epoxy resin. Also, for example, the pressure-sensitive adhesion of the adhesive layer can be degraded by including a plural kinds of epoxy resins with different weight average molecular weights in the adhesive layer, that is when the adhesive layer contains one epoxy resin, and the other epoxy resin of which weight average molecular weight is 370 or more and is larger in 300 or more than the weight average molecular weight of the one epoxy resin. In more specific, in the adhesive layer containing the epoxy resin and the curing agent, as described later, as the epoxy resin, a first epoxy resin with low softening temperature and low molecular weight, and a second epoxy resin with high softening temperature and high molecular weight may be included to degrade the pressure-sensitive adhesion of the adhesive layer. Also, in the adhesive layer containing the epoxy resin and the curing agent, as described later, the pressure-sensitive adhesion of the adhesive layer can be degraded by including an acrylic resin soluble with the epoxy resin.

In the present disclosure, when the foaming adhesive sheet is foamed and cured so that a thickness, which is from a surface of the first adhesive layer opposing to the second adhesive layer to a surface of the second adhesive layer opposing to the first adhesive layer, becomes a distance between the first member and the second member, a thickness of the first adhesive layer and the thickness, which is from the surface of the first adhesive layer opposing to the second adhesive layer to the surface of the second adhesive layer opposing to the first adhesive layer, are set so that a foaming ratio E represented by the below equation (1) is in the specified range.

$$E = (G1 - T2) / T1 \qquad (1)$$

(In the equation (1), E represents a foaming ratio, G1 represents the distance between the first member and the second member, T1 represents a thickness of the first adhesive layer before foamed and cured, T2 represents a thickness, which is from the surface of the first adhesive layer opposing to the second adhesive layer to the surface of the second adhesive layer opposing to the first adhesive layer, before foamed and cured.)

The foaming ratio E is over 1.0 and 8.5 or less, preferably 1.2 or more and 8.3 or less, and more preferably 1.5 or more and 8.0 or less. As described above, when the foaming ratio E is in the specified range, in the case where the distance G2 of the space after disposing the foaming adhesive sheet between the first member and the second member is in the specified range, the foaming adhesive sheet can be suitable for filling the space between the first member and the second member, and for adhering the first member and the second member.

Also, since the foaming adhesive sheet in the present disclosure is disposed between the first member and the second member and used for adhering the first member and the second member when the distance G2 of the space after disposing the foaming adhesive sheet between the first member and the second member is in the specified range, it is necessary that the thickness T2, which is from a surface of the first adhesive layer opposing to the first adhesive layer to a surface of the second adhesive layer opposing to the first adhesive layer, before foamed and cured, is smaller than the distance G1 between the first member and the second member.

In the foaming adhesive sheet in the present disclosure, when the foaming adhesive sheet is foamed and cured, the first adhesive layer can be foamed until when the thickness from the surface of the first adhesive layer opposing to the second adhesive layer to the surface of the second adhesive layer opposing to the first adhesive layer becomes the distance between the first member and the second member.

Also, the distance G1 between the first member and the second member refers to a distance of the space between the first member and the second member where the foaming adhesive sheet is disposed. The distance G1 between the first member and the second member is larger than the thickness T2 which is from the surface of the first adhesive layer opposing to the second adhesive layer to the surface of the second adhesive layer opposing to the first adhesive layer.

Also, the distance G2 of the space after disposing the foaming adhesive sheet between the first member and the second member is a value obtained by subtracting the thickness T2, which is from the surface of the first adhesive layer opposing to the second adhesive layer to the surface of the second adhesive layer opposing to the first adhesive layer, from the distance G1 between the first member and the second member, that is a value of G1 - T2. The distance G2 of the space after the foaming adhesive sheet is disposed between the first member and the second member is, for example, preferably over 10 um and 500 um or less, more preferably over 10 um and 450 um or less, and further preferably over 10 um and 400 um or less. The present disclosure is suitable for the case where the distance G2 of the space after disposing the foaming adhesive sheet between the first member and the second member is comparatively small as the above.

Here, the foaming ratio E can be obtained by the following method. First, plate-shaped first member and second member are used, and the foaming adhesive sheet is disposed on the plate-shaped first member, and the plate-shaped second member is disposed on the foaming adhesive sheet. On this occasion, the distance G2 of the space after disposing the foaming adhesive sheet between the first member and the second member is in the specified range. Also, on this occasion, when the foaming adhesive sheet includes a separator, the foaming adhesive sheet is disposed after peeling off the separator to expose the first adhesive layer and the second adhesive layer. Next, the foaming adhesive sheet is foamed and cured. Foaming and curing conditions of the foaming adhesive sheet are not particularly limited as long as the conditions allow the foaming adhesive sheet to be foamed and cured so that the thickness from the surface of the first adhesive layer opposing to the second adhesive layer to the surface of the second adhesive layer opposing to the first adhesive layer becomes the distance G1 between the first member and the second member, and thus the conditions are appropriately set depending on the foaming adhesive sheet. The foaming and curing conditions of the foaming adhesive sheet may be, for example, the heating temperature in the range of 100°C or more and 200°C or less, and the heating time in the range of 1 minute or more and 120 minutes or less, and appropriately selected depending on the kinds of the curable adhesive agent and the foaming agent used in the first adhesive layer, and the kinds of the curable adhesive agent used in the second adhesive layer.

It should be noted that, when obtaining the foaming ratio E, in the case where the foaming adhesive sheet cannot be foamed and cured until the thickness from the surface of the first adhesive layer opposing to the second adhesive layer to the surface of the second adhesive layer opposing to the first adhesive layer becomes the distance G1 between the first member and the second member, even by adjusting the foaming and curing conditions, it means that the foaming ratio E cannot be measured.

Also, the thickness, which is from the surface of the first adhesive layer opposing to the second adhesive layer to the surface of the second adhesive layer opposing to the first adhesive layer, is a value measured from the cross-section in a thickness direction of the foaming adhesive sheet observed by a transmission electron microscope (TEM), a scanning electron microscope (SEM), or a scanning transmission electron microscope (STEM), and it may be an average value of the thicknesses of 10 points selected randomly. The measurement method for the thickness of each layer included in the foaming adhesive sheet, and the measurement method for the distance G1 between the first member and the second

member can be the same.

Also, in the present disclosure, the foaming ratio E can be in the specified range by adjusting the thickness of each layer included in the foaming adhesive sheet, the average particle size and the content of the foaming agent in the first adhesive layer, and the like.

In the present disclosure, a static friction coefficient of the surface of the first adhesive layer opposing to the second adhesive layer, and a static friction coefficient of the surface of the second adhesive layer opposing to the first adhesive layer, are respectively, for example, preferably 0.33 or less, may be 0.30 or less, and may be 0.26 or less. When the static friction coefficient of the surfaces of the first adhesive layer and the second adhesive layer are in the above range, the slippage of the foaming adhesive sheet can be well. Also, the static friction coefficient may be, for example, 0.16 or more.

Also, the static friction coefficient of the surface of the first adhesive layer opposing to the second adhesive layer is preferably smaller than the static friction coefficient of the surface of the second adhesive layer opposing to the first adhesive layer.

FIGS. 5A to 5D are process diagrams exemplifying the method for producing a product using the foaming adhesive sheet in the present disclosure. When first member 20a and second member 20b shown in FIG. 5A are to be adhered, for example, as shown in FIG. 5B, foaming adhesive sheet 10 is disposed in a groove of the first member 20a, and as shown in FIG. 5C, after disposing the second member 20b in the groove of the first member 20a where the foaming adhesive sheet 10 is disposed, as shown in FIG. 5D, by foaming and curing first adhesive layer 1 of the foaming adhesive sheet 10 as well as curing the second adhesive layer 2, the first member 20a and the second member 20b can be adhered. In this case, when the static friction coefficient of surface S1 of the first adhesive layer 1 opposing to the second adhesive layer 2 is smaller than the static friction coefficient of surface S2 of the second adhesive layer 2 opposing to the first adhesive layer 1, the second member 20b can be smoothly inserted into the groove of the first member 20a where the foaming adhesive sheet 10 is disposed at the time of disposing the second member 20b in the groove of the first member 20a where the foaming adhesive sheet 10 is disposed. For this reason, problems such as a scratch, a peel-off, a lifting, and a deflection of the foaming adhesive sheet 10 during the insertion of the second member 20b can be inhibited.

Here, the static friction coefficient of the surface of the first adhesive layer and the second adhesive layer can be obtained in accordance with JIS K7125 corresponding to ISO 8295. In specific, the static friction coefficient of the surface of the first adhesive layer opposing to the second adhesive layer is measured as a static friction coefficient of the first adhesive layer with a metal plate. Similarly, the static friction coefficient of the surface of the second adhesive layer opposing to the first adhesive layer is measured as a static friction coefficient of the second adhesive layer with a metal plate. In specific, first, the foaming adhesive sheet is cut into 80 mm * 200 mm. Next, the foaming adhesive sheet is placed still on a metal plate (SUS plate) in a square shape that is horizontally placed still, and a slipping piece (63 mm * 63 mm, 200 g weight, bottom surface: felt) is put on the first adhesive layer or the second adhesive layer of the foaming adhesive sheet, and a friction is measured in the conditions of the test speed of 100 mm/min, the test length of 50 mm, the load cell of 10 N, and the temperature of 23°C to calculate the dynamic friction coefficient. As a device, for example, a friction measurement machine FRICTION TESTER TR-2 from Toyo Seiki Seisaku-sho, Ltd. can be used.

In the present disclosure, the static friction coefficient of the surfaces of the first adhesive layer and the second adhesive layer can be controlled by, for example, adjusting the compositions of the first adhesive layer and the second adhesive layer. In specific, the static friction coefficient of the surface of the first adhesive layer can be controlled by the average particle size or the content of the foaming agent included in the first adhesive layer. In more specific, as the average particle size of the foaming agent increases, the static friction coefficient of the surface of the first adhesive layer tends to decrease. Also, as the content of the foaming agent increases, the static friction coefficient of the surface of the first adhesive layer tends to decrease. Also, similarly to the method for controlling the tack of the first adhesive layer and the second adhesive layer, the static friction coefficient tends to decrease when the compositions of the first adhesive layer and the second adhesive layer are adjusted so that the pressure-sensitive adhesion of the first adhesive layer and the second adhesive layer is degraded.

In the present disclosure, the arithmetic average roughness (Ra) of the surface of the first adhesive layer opposing to the second adhesive layer is, for example, preferably 0.3 um or more, may be 0.5 um or more, and may be 0.7 um or more. When the Ra of the first adhesive layer is in the above range, the first adhesive layer may have excellent slippage. Also, the Ra of the first adhesive layer may be, for example, 1.5 um or less, may be 1.3 um or less, and may be 1.1 um or less.

Here, the Ra of the first adhesive layer can be measured using a white interferometer. In specific, the Ra of the first adhesive layer can be measured using the white interferometer NewView7300 from Zygo Corporation, with observation filed: 0.55 mm * 0.55 mm and sampling space: 0.55 $\mu$m.

In the present disclosure, the Ra of the first adhesive layer can be controlled by, for example, adjusting the composition of the first adhesive layer. In specific, when the first adhesive layer further contains a foaming agent, the Ra of the first adhesive layer can be controlled by the average particle size or the content of the foaming agent included in the first adhesive layer. In more specific, as the average particle size of the foaming agent increases, the Ra of the first adhesive

layer tends to increase. Also, as the content of the foaming agent increases, the Ra of the first adhesive layer tends to increase.

In the foaming adhesive sheet in the present disclosure, when the shear strength is measured in accordance with JIS K6850, the cohesive failure rate is, for example, preferably 25% or more, more preferably 30% or more, and further preferably 40% or more. When the cohesive failure rate is in the above range, unevenness of the adhesion strength after foaming and curing the foaming adhesive sheet can be reduced, and the reliability can be improved.

Here, the cohesive failure rate can be measured in accordance with JIS K6850. The details of the method for measuring the cohesive failure rate will be described in the section of Examples later.

The foaming adhesive sheet in the present disclosure preferably has excellent shape retainability. It is preferable that the shape retainability is excellent. The bending moment based on JIS P8125 corresponding to ISO 2493 is, for example, 0.1 gf·cm or more, and may be 1 gf·cm or more. Meanwhile, the bending moment is, for example, less than 40 gf·cm, and may be less than 30 gf·cm. Conventionally, in the foaming adhesive sheet, it has been a commonly used approach to increase the shape retainability and the inserting property into a narrow space, by increasing the bending moment. In contrast to this, the inventors of the present disclosure have found out that, considering other properties, the bending moment is preferably in the range described above, since the shape retainability may be secured by contriving the shape, and since other problem may be arose when the bending moment is high. When the bending moment is lower than the range described above, the retaining of the shape may be difficult even by a contriving such as a folding back. Also, when the bending moment is higher than the range described above, since the shape is reversed after a folding process, a heating is necessary during the folding process, or a folding line is needed to be rucked. The sheet life duration may be deteriorated when it is heated, and the insulation property of the rucked portion may be deteriorated. In addition, in the foaming adhesive sheet in the present disclosure, the surface is not damaged even when it is inserted rapidly, by increasing the surface hardness.

The adhesion of the foaming adhesive sheet in the present disclosure after formed and cured is preferably high. In the adhesive sheet after foamed and cured, the tensile shear strength (adhesive strength) based on JIS K6850 corresponding to ISO 4587 at 23°C may be, for example, 0.1 MPa or more, may be 1.0 MPa or more, and may be 1.5 MPa or more.

The foaming adhesive sheet in the present disclosure preferably has high electrical insulating property after foamed and cured. In the adhesive sheet after formed and cured, the dielectric breakdown voltage based on JIS C2107 corresponding to IEC 60454-2 is, for example, preferably 3 kV or more, and more preferably 5 kV or more. When the dielectric breakdown voltage is in the above range, it may be applied to an anticorrosion application or to copper wiring surroundings. Also, in the adhesive sheet after foamed and cured, the thermal conductivity is, for example, preferably 0.1 W/mK or more, and more preferably 0.15 W/mK or more. When the thermal conductivity is in the above range, the parts may be decreased in size, and the curing reaction during the heating may be proceeded.

2. First adhesive layer

(1) Materials of first adhesive layer

The first adhesive layer in the present disclosure contains a curable adhesive agent and a foaming agent.

(a) Curable adhesive agent

As the curable adhesive agent included in the first adhesive layer in the present disclosure, a curable adhesive agent commonly used for an adhesive layer of a foaming adhesive sheet can be used. Examples of the curable adhesive agent may include a thermosetting adhesive agent and a photo curing adhesive agent. Among them, the thermosetting adhesive agent is preferable. The thermosetting adhesive agent may be applied even when the member is not transparent, such as in a case of a metal member.

Also, examples of the curable adhesive agent may include an epoxy resin-based adhesive agent, an acrylic resin-based adhesive agent, a phenolic resin-based adhesive agent, an unsaturated polyester resin-based adhesive agent, an alkyd resin-based adhesive agent, a urethane resin-based adhesive agent, and a thermosetting polyimide resin-based adhesive agent.

Among those, the curable adhesive agent is preferably the epoxy resin-based adhesive agent. That is, the curable adhesive agent preferably includes an epoxy resin and a curing agent. In general, the epoxy resin-based adhesive agent is excellent in properties such as mechanical strength, heat resistance, insulating property and chemical resistance, curing shrinkage is small, so that it may be used in a wide variety of applications.

A case wherein the curable adhesive agent is the epoxy resin-based adhesive agent will be hereinafter explained with reference to examples.

(i) Epoxy resin

The epoxy resin in the present disclosure is a compound including at least one or more epoxy group or glycidyl group, and cured by causing a cross-linking polymerization reaction by being used in combination with a curing agent. The epoxy resin also includes a monomer including at least one or more epoxy group or glycidyl group.

An epoxy resin generally used for an adhesive layer of a foaming adhesive sheet may be sued as the epoxy resin. Among them, as the epoxy resin, the curable adhesive agent preferably includes a first epoxy resin with softening temperature of 50°C or more and an epoxy equivalent of 5000 g/eq or less, and a second epoxy resin with softening temperature higher than that of the first epoxy resin and a weight-average molecular weight of 20,000 or more. By using the first epoxy resin and the second epoxy resin in combination, the pressure-sensitive adhesion (tack property) of the adhesive layer may be decreased so that a foaming adhesive sheet having excellent slippage may be obtained. Further, a first adhesive layer having excellent blocking resistance and excellent adhesion after foamed and cured may be obtained.

When attempting only an improvement in adhesion after foamed and cured, for example, it is effective to use an epoxy resin with a lower molecular weight (low epoxy equivalent) than an epoxy resin with a high molecular weight (high epoxy equivalent). However, when the epoxy resin with a low molecular weight (low epoxy equivalent) is used, the epoxy resins with a low molecular weight (low epoxy equivalent) are assimilated with each other when, for example, the foaming adhesive sheet is rolled up into a roll, and the blocking easily occurs.

In contrast to this, if a first epoxy resin with relatively low softening temperature (relatively high crystallinity) and a low molecular weight (low epoxy equivalent) is used, when the temperature is higher than the softening temperature, the first epoxy resin is rapidly melted and turned into a liquid with a low viscosity. Therefore, it is easy to improve the adhesion after foamed and cured. Meanwhile, since the first epoxy resin is relatively high in crystallinity, the blocking may be suppressed from occurring, compared to an epoxy resin with relatively low crystallinity or an epoxy resin with no crystallinity. However, when only the first epoxy resin is used, there is a possibility that the blocking suppressing effect is not sufficient, or that the pressure-sensitive adhesion (tack property) of the first adhesive layer may be too high. Therefore, when a second epoxy resin with relatively high softening temperature (with relatively low crystallinity) and high molecular weight is further used, the blocking suppressing effect may be improved, and the pressure-sensitive adhesion (tack property) of the first adhesive layer may be kept low.

(i-1) First epoxy resin

The first epoxy resin has softening temperature of 50°C or more, and an epoxy equivalent of 5000 g/eq or less. The first epoxy resin has relatively low softening temperature (relatively high crystallinity) as compared with the second epoxy resin to be described later. Since the first epoxy resin has relatively high crystallinity and low molecular weight, it is easy to improve the adhesiveness after foamed and cured and the blocking resistance. Also, since the first epoxy resin has a low molecular weight, a cross-linking density may be increased so that a first adhesive layer having good mechanical strength, chemical resistance, and curability may be obtained. Also, it is preferable that the first epoxy resin is a solid epoxy resin at ordinary temperature (23°C) .

The softening temperature of the first epoxy resin is usually 50°C or more, may be 55°C or more, and may be 60°C or more. Meanwhile, the softening temperature of the first epoxy resin is, for example, 150°C or less. The softening temperature may be measured by a ring and ball method according to JIS K7234.

The epoxy equivalent of the first epoxy resin is, for example, 5000 g/eq or less, may be 3000 g/eq or less, may be 1000 g/eq or less, and may be 600 g/eq or less. Meanwhile, the epoxy equivalent of the first epoxy resin is, for example, 90 g/eq or more, may be 100 g/eq or more, and may be 110 g/eq or more. The epoxy equivalent may be measured by a method in accordance with JIS K7236 corresponding to ISO 3001 (Plastics Epoxy compounds-Determination of epoxy equivalent), and is a number of grams of a resin including an epoxy group of 1 gram equivalent.

The first epoxy resin may be a monofunctional epoxy resin, may be a bifunctional epoxy resin, may be a trifunctional epoxy resin, and may be an epoxy resin of a tetrafunctional or more.

Also, the weight-average molecular weight (Mw) of the first epoxy resin is usually lower than the weight-average molecular weight (Mw) of the second epoxy resin to be described later. Mw of the first epoxy resin is, for example 6,000 or less, may be 4,000 or less, and may be 3,000 or less. Meanwhile, Mw of the first epoxy resin is, for example, 400 or more. Mw is a value in terms of polystyrene when measured with a gel permeation chromatography (GPC).

The melt viscosity of the first epoxy resin at 150°C is, for example, 0.005 Pa·s or more, may be 0.015 Pa·s or more, may be 0.03 Pa·s or more, may be 0.05 Pa·s or more, and may be 0.1 Pa·s or more. When the melt viscosity is too low, excellent foaming property may not be obtained. Also, when the melt viscosity of the first epoxy resin is too low (when the crystallinity of the first epoxy resin is too high), the pressure-sensitive adhesion (tack property) of the first adhesive layer to be obtained may be high. The reason therefor is presumed that, when the melt viscosity of the first epoxy resin is too low (when the crystallinity of first epoxy resin is too high), the crystallinity thereof greatly decreases when it is compatibilized with the second epoxy resin or the acrylic resin so that Tg of the first adhesive layer is decreased. Meanwhile, the melt

viscosity of the first epoxy resin at 150°C is, for example, 10 Pa·s or less, may be 5 Pa·s or less, and may be 2 Pa·s or less. When the melt viscosity is too high, the uniformity of the first adhesive layer to be obtained may be decreased. The melt viscosity may be determined by measuring with a Brookfield type single cylinder rotary viscosimeter and a thermocell for heating a solution, according to JIS K6862 corresponding to ISO 2555 (Resins in the liquid state or as emulsions or dispersions Determination of Brookfield RV viscosity).

Next, a configuration of the first epoxy resin will be described. Examples of the first epoxy resin may include an aromatic epoxy resin, an aliphatic epoxy resin, an alicyclic epoxy resin, and a heterocyclic epoxy resin. Specific examples of the first epoxy resin may include bisphenol type epoxy resins such as a bisphenol A type epoxy resin and a bisphenol F type epoxy resin; novolac type epoxy resins such as a bisphenol A novolac type epoxy resin and a cresol novolac type epoxy resin; and modified epoxy resins such as a urethane modified epoxy resin and a rubber modified epoxy resin. Further, other specific example may include a biphenyl type epoxy resin, a stilbene type epoxy resin, a triphenol methane type epoxy resin, an alkyl-modified triphenol methane type epoxy resin, a triazine nucleus-containing epoxy resin, a dicyclopentadiene-modified phenol type epoxy resin, a naphthalene type epoxy resin, a glycol type epoxy resin, and a pentaerythritol type epoxy resin. The first epoxy resin may be one kind, and may be two kinds or more.

The bisphenol A type epoxy resin may be present in a liquid state at ordinary temperature or in a solid state at ordinary temperature according to the number of repeating units of the bisphenol skeleton. The bisphenol A type epoxy resin wherein the bisphenol skeleton of the main chain is, for example, 2 or more and 10 or less is solid at ordinary temperature. In particular, the bisphenol A type epoxy resin is preferable in the point of attempting to improve the heat resistance.

Particularly, the first epoxy resin is preferably a bisphenol A novolac type epoxy resin represented by the following general formula (1).

[Chemical 1]

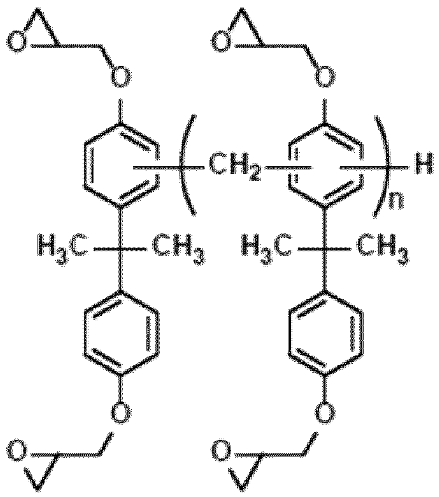

General formula (1)

In general formula (1), $R^1$ is a group represented by $C_mH_{2m}$ ("m" is 1 or more and 3 or less), $R^2$ and $R^3$ are respectively and independently a group represented by $C_pH_{2p+1}$ ("p" is 1 or more and 3 or less), and "n" is 0 or more and 10 or less.

In general formula (1), "m" in $R^1$ is preferably 1, that is, $R^1$ is preferably $-CH_2-$. Similarly, "p" in $R^2$ and $R^3$ is preferably 1, that is, $R^2$ and $R^3$ are preferably $-CH_3$. Also, the hydrogen that bonds to the benzene ring in general formula (1) may be substituted with another element or another group.

The content of the first epoxy resin when the resin component included in the first adhesive layer is regarded as 100 mass parts is, for example, 1 mass part or more, may be 3 mass parts or more, may be 5 mass parts or more, may be 10 mass parts or more, may be 15 mass parts or more, and may be 25 mass parts or more. When the content of the first epoxy resin is too low, the adhesion after foamed and cured and the blocking resistance may be deteriorated. Meanwhile, the content of the first epoxy resin when the resin component included in the first adhesive layer is regarded as 100 mass parts is, for example, 90 mass parts or less, may be 80 mass parts or less, may be 70 mass parts or less, may be 60 mass parts or less, may be 50 mass parts or less, and may be 40 mass parts or less. When the content of the first epoxy resin is too much,

the content of the second epoxy resin and the acrylic resin will be relatively low so that there is a possibility that the non-pressure-sensitive adhesion, the blocking resistance, the close adhesion with respect to the substrate after foamed and cured, the cracking resistance after foamed and cured, and the adhesion after foamed and cured may not be balanced.

(i-2) Second epoxy resin

The softening temperature of the second epoxy resin is higher than that of the first epoxy resin and the weight-average molecular weight is 20,000 or more. The second epoxy resin has relatively high softening temperature (relatively low crystallinity), compared to the above described first epoxy resin. Since the second epoxy resin has relatively low crystallinity and has high molecular weight, the blocking resistance is easily improved. Further, since the second epoxy resin has relatively low crystallinity and has high molecular weight, the increase of the pressure-sensitive adhesion (tack property) due to the first epoxy resin may be suppressed. Also, the second epoxy resin is preferably a solid epoxy resin at ordinary temperature (23°C).

The weight-average molecular weight (Mw) of the second epoxy resin is usually higher than the weight-average molecular weight (Mw) of the first epoxy resin. Mw of the second epoxy resin is usually, 20,000 or more, may be 30,000 or more, and may be 35,000 or more. Meanwhile, Mw of the second epoxy resin is, for example, 100,000 or less.

The epoxy equivalent of the second epoxy resin may be higher than, less than, or equal to the epoxy equivalent of the first epoxy resin. The epoxy equivalent of the second epoxy resin is, for example, 4000 g/eq or more, may be 5000 g/eq or more, and may be 6000 g/eq or more. Meanwhile, the epoxy equivalent of the second epoxy resin is, for example, 20000 g/eq or less.

The second epoxy resin may be a monofunctional epoxy resin, may be a bifunctional epoxy resin, may be a trifunctional epoxy resin, and may be an epoxy resin of a tetrafunctional or more.

The softening temperature of the second epoxy resin is usually higher than the softening temperature of the first epoxy resin. The difference between the two is, for example, 10°C or more, may be 20°C or more, and may be 30°C or more. The softening temperature of the second epoxy resin is, for example, 80°C or more, and may be 90°C or more. Meanwhile, the softening temperature of the second epoxy resin is, for example, 180°C or less.

The configuration of the second epoxy resin is the same as the configuration of the above describe first epoxy resin; thus, the description herein is omitted.

The content of the second epoxy resin when the resin component included in the first adhesive layer is regarded as 100 mass parts is, for example, 10 mass parts or more, may be 15 mass parts or more, may be 20 mass parts or more, may be 25 mass parts or more, may be 30 mass parts or more, may be 35 mass parts or more, may be 40 mass parts or more, and may be 45 mass parts or more. When the content of the second epoxy resin is too low, the close adhesion may be high, and the blocking resistance may be deteriorated. Meanwhile, the content of the second epoxy resin when the resin component included in the first adhesive layer is regarded as 100 mass parts is, for example, 90 mass parts or less, may be 85 mass parts or less, may be 80 mass parts or less, and may be 75 mass parts or less. When the content of the second epoxy resin is too much, the content of the first epoxy resin and the acrylic resin will be relatively low so that there is a possibility that the non-pressure-sensitive adhesion, the blocking resistance, the close adhesion with respect to the substrate after foamed and cured, the cracking resistance after foamed and cured, and the adhesion after foamed and cured may not be balanced.

The proportion of the first epoxy resin with respect to the total of the first epoxy resin and the second epoxy resin is, for example, 5 mass% or more, may be 10 mass% or more, may be 15 mass% or more, and may be 20 mass% or more. Meanwhile, the proportion of the first epoxy resin is, for example, 80 mass% or less, may be 75 mass% or less, and may be 60 mass% or less.

Also, the proportion of the total of the first epoxy resin and the second epoxy resin with respect to all the epoxy resins included in the first adhesive layer is, for example, 50 mass% or more, may be 70 mass% or more, may be 90 mass% or more, and may be 100 mass%.

(ii) Acrylic resin

When the curable adhesive agent is the epoxy resin-based adhesive agent, the first adhesive layer may further include an acrylic resin compatible with the epoxy resin. The acrylic resin is a resin compatibilized with the epoxy resin. Since the acrylic resin is compatible with the epoxy resin, the toughness of the first adhesive layer is likely to be improved. As the result, the adhesion after foamed and cured may be improved. Further, the acrylic resin is believed to function as a compatibilizing agent of the foaming agent (such as a foaming agent whose shell part is an acrylonitrile copolymer resin), and the adhesion after foamed and cured is improved by being uniformly dispersed and foamed. Also, the flexibility due to the acrylic resin is exhibited so that the close adhesion with respect to the substrate after foamed and cured, and cracking resistance after foamed and cured may be improved. Also, the hardness of the first adhesive layer surface may be maintained at high level, by the acrylic resin being compatibilized with the epoxy resin. Meanwhile, if the acrylic resin is

incompatible with the epoxy resin, a flexible part is formed on the first adhesive layer surface so that the interface with the adherend is not slippery enough, and the workability may be deteriorated.

The acrylic resin in the present disclosure is compatibilized with the epoxy resin. Here, the state that the acrylic resin being compatibilized with the epoxy resin may be confirmed by, for example, observing the cross-section of the first adhesive layer of the foaming adhesive sheet with a scanning electron microscope (SEM) or a transmission electron microscope (TEM), to confirm that a micron sized island is not formed. More specifically, the average particle size of the island is preferably 1 um or less. Above all, the average particle size of the island may be 0.5 um or less, and may be 0.3 um or less. The number of the samples is preferably large, and is, for example, 100 or more. The area of the observed region is in a range of 100 um * 100 um or, when the thickness of the first adhesive layer is 100 um or less, the observation is carried out in a range of thickness * 100 μm.

The weight-average molecular weight (Mw) of the acrylic resin is, for example, 50,000 or more, may be 70,000 or more, and may be 100,000 or more. The first epoxy resin is relatively high in crystallinity so that the melt viscosity (or dynamic viscoelasticity) upon heating may be too low, and a shrinkage may occur during curing after foaming (the term from the completion of foaming of the foaming agent until the first adhesive layer is cured). However, by using the acrylic resin having a certain level of molecular weight, the melt viscosity may be suppressed from being too low so that the shrinkage during curing after foaming is less likely to occur. Meanwhile, Mw of the acrylic resin is, for example, 1,500,000 or less. The weight-average molecular weight of the acrylic resin may be measured by GPC (eluent: THF, standard substance: PS, sample: 20 μL, flow: 1 mL/min, column temperature: 40°C).

The glass transition temperature (Tg) of the acrylic resin is, for example, 90°C or more, and may be 100°C or more. Meanwhile, Tg of the acrylic resin is, for example, 180°C or less. Tg may be measured by a thermal analysis such as differential scanning calorimetry (DSC) according to JIS K7121 corresponding to ISO 3146.

The storage elastic modulus (E') of the acrylic resin at foaming start temperature may be 1 * $10^6$ Pa or less. By E' being low at the start of the foaming, the flowability is improved so that excellent foaming ability may be obtained. Meanwhile, E' at foaming start temperature is, for example, 1 * $10^5$ Pa or more. Incidentally, foaming start temperature is temperature that varies depending on the kind of the foaming agent. Also, when two kinds or more of the foaming agents are used as the foaming agent, start temperature of the main foaming reaction is regarded as the foaming start temperature.

The storage elastic modulus (E') of the acrylic resin at curing start temperature may be 1 * $10^5$ Pa or more. As described above, the shrinkage may occur during curing after foaming (the term from the completion of foaming of the foaming agent until the first adhesive layer is cured). However, the shrinkage may be suppressed and excellent shape retainability may be obtained by E' being high at curing start temperature. Note that curing start temperature is temperature that varies depending on the kind of the curing agent. Also, when two kinds or more of the curing agents are used as the curing agent, start temperature of the main curing reaction is regarded as the curing start temperature.

Also, the average value of the storage elastic modulus (E') of the acrylic resin at 0°C or more and 100°C or less may be 1 * $10^6$ Pa or more. Excellent non-pressure-sensitive adhesion and blocking resistance may be obtained by the average value of E' before the foaming being high. Meanwhile, the average value of the storage elastic modulus (E') at 0°C or more and 100°C or less is, for example, 1 * $10^8$ Pa or less.

The acrylic resin may include a polar group. Examples of the polar group may include an epoxy group, a hydroxyl group, a carboxyl group, a nitrile group, and an amide group.

The acrylic resin may be a homopolymer of acrylic acid ester monomers that is a mixture component including two kinds or more of the above described homopolymer; and may be a copolymer of two kinds or more acrylic acid ester monomers that is a component including one or more copolymer. Also, the acrylic resin may be a mixture component of the homopolymer and the copolymer. The "acrylic acid" in the acrylic acid ester monomers includes the concept of a methacrylic acid. Specifically, the acrylic resin may be a mixture of the methacrylate polymer and the acrylate polymer, and may be an acrylic acid ester polymer such as acrylate-acrylate, methacrylate-methacrylate, and methacrylate-acrylate. Among them, the acrylic resin preferably includes a copolymer of two kinds or more acrylic acid ester monomers ((meth)acrylic acid ester copolymer).

Examples of the monomer component constituting the (meth)acrylic acid ester copolymer may include the monomer component described in Japanese Patent Application Laid-Open (JP-A) No. 2014-065889. The monomer component may include the above described polar group. Examples of the (meth)acrylic acid ester copolymer may include an ethyl acrylate-butyl acrylate-acrylonitrile copolymer, an ethyl acrylate-acrylonitrile copolymer, and a butyl acrylate-acrylonitrile copolymer. Incidentally, the "acrylic acid" such as acrylic acid methyl and acrylic acid ethyl includes "methacrylic acid" such as (meth)acrylic acid methyl and (meth)acrylic acid ethyl.

As the (meth) acrylic acid ester copolymer, a block copolymer is preferable, and an acrylic block copolymer such as a methacrylate-acrylate copolymer is further preferable. Examples of the (meth) acrylate constituting the acrylic block copolymer may include methyl acrylate, ethyl acrylate, propyl acrylate, butyl acrylate, lauryl acrylate, 2-ethylhexyl acrylate, cyclohexyl acrylate, and benzyl acrylate. These "acrylic acid" also includes "methacrylic acid".

Specific examples of the methacrylate-acrylate copolymer may include acrylic copolymers such as methyl

methacrylate-butyl acrylate-methyl methacrylate (MMA-BA-MMA) copolymers. MMA-BA-MMA copolymers also include block copolymers of polymethylmethacrylate-polybutylacrylate-polymethylmethacrylate (PMMA-PBA-PMMA).

The acrylic copolymer may not include a polar group, and may be a modified product wherein the above described polar group is introduced into a part. Since the modified product is easily compatible with an epoxy resin, adhesion is further improved.

Among them, the acrylic resin is preferably a (meth) acrylic acid ester copolymer including a first polymer portion having glass transition temperature (Tg) of 10°C or less, and a second polymer portion having glass transition temperature (Tg) of 20°C or more. Such a (meth) acrylic acid ester copolymer includes a first polymer portion to be a soft segment and a second polymer portion to be a hard segment.

The expression of the above effect may be estimated as follows. By using an acrylic resin including both of a soft segment and a hard segment, such as the above (meth) acrylic acid ester copolymer, the hard segment contributes to heat resistance, and the soft segment contributes to toughness or flexibility, so that a first adhesive layer having good heat resistance, toughness, and flexibility may be obtained.

At least one of the first polymer portion and the second polymer portion included in the above (meth) acrylic acid ester copolymer has compatibility with the epoxy resin. When the first polymer portion has compatibility with the epoxy resin, flexibility may be increased. Also, when the second polymer portion has compatibility with the epoxy resin, it is possible to enhance the cohesiveness and toughness.

When one of the first polymer portion and the second polymer portion has no compatibility with the epoxy resin, the (meth) acrylic acid ester copolymer includes a compatible site that is a polymer portion compatible with the epoxy resin and an incompatible site that is a polymer portion not compatible with the epoxy resin. In this case, when the above (meth) acrylic acid ester copolymer is added, the compatible site is compatibilized with the epoxy resin, and the incompatible site is not compatibilized with the epoxy resin, so that fine phase separation occurs. As the result, a fine sea-island structure is developed. The sea-island structure varies depending on the type of the (meth) acrylic acid ester copolymer, the compatibility of the first polymer portion and the second polymer portion included in the (meth) acrylic acid ester copolymer, and whether the modification by introducing a polar group is done or not. Examples of the sea-island structure may include a sea-island structure wherein a cured product of the epoxy resin and a compatible site of the (meth) acrylic acid ester copolymer are seas, and a non-compatible site of the (meth) acrylic acid ester copolymer is an island; a sea-island structure wherein a non-compatible site of the (meth) acrylic acid ester copolymer is a sea, and a cured product of the epoxy resin and a compatible site of the (meth) acrylic acid ester copolymer are islands; and a sea-island structure wherein the (meth) acrylic acid ester copolymer is a sea, and a cured product of the epoxy resin is an island. By having such a sea-island structure, it is possible to easily disperse the stress, so that it is possible to avoid interfacial breakage and to obtain excellent adhesion after foamed and cured.

Among the above, the (meth) acrylic acid ester copolymer is preferably a block copolymer, and particularly preferably an A-B-A block copolymer including a polymer block A as a compatible site and a polymer block B as a non-compatible site. Further preferable is a A-B-A block copolymer wherein the first polymer portion is a non-compatible site and the second polymer portion is a compatible site, and the first polymer portion is a polymer block B and the second polymer portion is a polymer block A. By using such an A-B-A block copolymer as an acrylic resin, the island portion may be decreased in the sea-island structure wherein a cured product of the epoxy resin and a compatible site of the (meth) acrylic acid ester copolymer are seas, and a non-compatible site of the (meth) acrylic acid ester copolymer is an island. Also, the sea portion may be decreased in the case of the sea-island structure wherein a non-compatible site of the (meth) acrylic acid ester copolymer is a sea, and a cured product of the epoxy resin, and a compatible site of the (meth) acrylic acid ester copolymer are islands; or in the case of the sea-island structure wherein the (meth) acrylic acid ester copolymer is a sea and a cured product of the epoxy resin is an island.

Further, the above (meth) acrylic acid ester copolymer may be a modified product obtained by introducing the above mentioned polar group into a part of the first polymer portion or the second polymer portion.

Tg of the first polymer portion included in the (meth) acrylic acid ester copolymer may be 10°C or less, may be in a range of -150°C or more and 10°C or less, among the above, in a range of -130°C or more and 0°C or less, particularly in a range of -110°C or more and -10°C or less.

Incidentally, Tg of the first polymer portion may be determined by calculating according to the following formula based on Tg (K) of each homopolymer described in "POLYMERHANDBOOK 3rd Edition" (issued by John Wiley & Sons, Ink.).

$$1/Tg\ (K) = W_1/Tg_1 + W_2/Tg_2 + \cdots + W_n/Tg_n$$

Wn; mass fraction of each monomer

$Tg_n$; Tg (K) of the homopolymer of the each monomer and publicly available listed values such as those in the Polymer Handbook (3rd Ed., J. Brandrup and E. H. Immergut, WILEY INTERSCIENCE) may be used. The same applies to Tg

of the second polymer portion described later.

The first polymer portion included in the above (meth) acrylic acid ester copolymer may be a homopolymer, and may be a copolymer; among them, a homopolymer is preferable. The monomer component and the polymer component constituting the first polymer portion may be any monomer component and polymer component capable of obtaining a first polymer portion with Tg in a predetermined range, and examples thereof may include acrylic acid ester monomers such as acrylic acid butyl, acrylic acid 2-ethylhexyl, acrylic acid isononyl, and acrylic acid methyl; other monomers such as vinyl acetate, acetal, and urethane; a polar group containing monomer including the above described polar group; and copolymers such as EVA.

Tg of the second polymer portion included in the (meth) acrylic acid ester copolymer is 20°C or more, may be in a range of 20°C or more and 150°C or less, and among the above, in a range of 30°C or more and 150°C or less, particularly in a range of 40°C or more and 150°C or less.

Also, the second polymer portion included in the (meth) acrylic acid ester copolymer may be a homopolymer, and may be a copolymer, but among them, a homopolymer is preferable. The monomer component constituting the second polymer portion may be any monomer component capable of obtaining a second polymer portion with Tg in a predetermined range, and examples thereof may include acrylic acid ester monomers such as methyl methacrylate; other monomers such as acrylamide, styrene, vinyl chloride, amide, acrylonitrile, cellulose acetate, phenol, urethane, vinylidene chloride, methylene chloride, and methacrylonitrile; and a polar group containing monomers including the above described polar group.

Specific examples of the (meth) acrylic acid ester copolymer including the first polymer portion and the second polymer portion described above may include the above described MMA-BA-MMA copolymers.

The content of the acrylic resin when the resin component included in the first adhesive layer is regarded as 100 mass parts is, for example, 1 mass part or more, may be 3 mass parts or more, may be 5 mass parts or more, may be 7 mass parts or more, and may be 10 mass parts or more. When the content of the acrylic resin is too little, there is a possibility that the close adhesion with respect to the substrate after foamed and cured, the cracking resistance after foamed and cured, and the adhesion after foamed and cured may be deteriorated. Meanwhile, the content of the acrylic resin when the resin component included in the first adhesive layer is regarded as 100 mass parts is, for example, 60 mass parts or less, may be 50 mass parts or less, may be 40 mass parts or less, may be 35 mass parts or less, and may be 30 mass parts or less. When the content of the acrylic resin is too much, the content of the first epoxy resin and the second epoxy resin will be relatively low so that there is a possibility that the non-pressure-sensitive adhesion, the blocking resistance, the close adhesion with respect to the substrate after foamed and cured, cracking resistance after foamed and cured, and the adhesion after foamed and cured may not be balanced. Also, when the content of the acrylic resin is too much, there is a possibility that the strength of the film may be decreased.

(iii) Curing agent

As the curing agent in the present disclosure, a curing agent generally used in an epoxy resin based adhesive agent may be used. The curing agent is preferably solid at an ordinary temperature (23°C). The curing agent that is solid at the ordinary temperature may improve storage stability (pot life), compared to the curing agent that is liquid at the ordinary temperature. Also, the curing agent may be a latent curing agent. Also, the curing agent may be a curing agent wherein a curing reaction occurs by heat, and may be a curing agent wherein a curing reaction occurs by light. Also, in the present disclosure, a curing agent may be used alone, and 2 kinds or more of them may be used.

Reaction start temperature of the curing agent is, for example, 110°C or more, and may be 130°C or more. When the reaction start temperature is too low, the reaction may be started early, and curing may occur in a condition where the flexibility and fluidity of the resin component are low, and uniform curing may hardly occur. Meanwhile, the reaction start temperature of the curing agent is, for example, 200°C or less. When the reaction start temperature is too high, there is a possibility that the resin component is deteriorated. Incidentally, in addition to the epoxy resin, for example, when a resin having high heat resistance such as a phenol resin is used, since deterioration of the resin component is small, reaction start temperature of the curing agent may be, for example, 300°C or less. The reaction start temperature of the curing agent may be determined by differential scanning calorimetry (DSC).

Specific examples of the curing agent may include an imidazole based curing agent, a phenol based curing agent, an amine based curing agent, an acid anhydride based curing agent, an isocyanate based curing agent, and a thiol based curing agent.

Examples of the imidazole based curing agent may include imidazoles, 2-phenyl-4,5-dihydroxymethylimidazole, 2-phenyl-4-methyl-5-hydroxymethylimidazole, 2-methylimidazole, 2-ethylimidazole, 2-ethyl-4-methylimidazole, 2-isopropylimidazole, 2-phenylimidazole, carboxylates of imidazole compounds, and adducts with epoxy compounds. Also, it is preferable that the imidazole based curing agent includes a hydroxyl group. Since it crystallizes by hydrogen bonding between hydroxy groups, reaction start temperature tends to be high.

Examples of the phenol based curing agent may include phenol resins. Further, examples of the phenol resin may include a resol type phenol resin and a novolac type phenol resin. From the viewpoint of the close adhesiveness with respect to the substrate after foamed and cured, and cracking resistance after foamed and cured, for example, a phenol type novolac resin having a Tg of 110°C or less is particularly preferable. Also, a phenol based curing agent and an imidazole based curing agent may be used in combination. In this case, it is preferable to use an imidazole based curing agent as a curing catalyst.

Examples of the amine based curing agent may include aliphatic amines such as diethylenetriamine (DETA), triethylenetetramine (TETA), and meth-xylylenediamine (MXDA); aromatic amines such as diaminodiphenylmethane (DDM), m-phenylenediamine (MPDA), and diaminodiphenylsulfone (DDS); alicyclic amines; and polyamidoamines. Also, as an amine based curing agent, a dicyandiamide based curing agent such as dicyandiamide (DICY); an organic acid dihydrazide based curing agent; an amine adduct based curing agent; and a ketimine based curing agent may be used.

Examples of the acid anhydride based curing agent may include alicyclic acid anhydrides (liquid acid anhydrides) such as hexahydrophthalic anhydride (HHPA) and methyltetrahydrophthalic anhydride (MTHPA); and aromatic acid anhydrides such as trimellitic anhydride (TMA), pyromellitic dianhydride (PMDA), and benzophenone tetracarboxylic dianhydride (BTDA).

Examples of the isocyanate based curing agent may include blocked isocyanate.

Examples of the thiol based curing agent may include an ester binding type thiol compound, an aliphatic ether binding type thiol compound, and an aromatic ether binding type thiol compound.

The content of the curing agent when the resin component included in the first adhesive layer is regarded as 100 mass parts is, for example, 1 mass part or more and 40 mass parts or less. For example, when an imidazole based curing agent is used as a main component as the curing agent, the content of the curing agent when the resin component included in the first adhesive layer is regarded as 100 mass parts is preferably, for example, 1 mass part or more and 15 mass parts or less. Meanwhile, when a phenol based curing agent is used as a main component as a curing agent, the content of the curing agent when the resin component included in the first adhesive layer is regarded as 100 mass parts is preferably, for example, 5 mass parts or more and 40 mass parts or less. Incidentally, an imidazole based curing agent or a phenol based curing agent is used as a main component as the curing agent means that the mass proportion of the imidazole based curing agent or the phenol based curing agent is the highest in the curing agent.

(b) Foaming agent

As the foaming agent included in the first adhesive layer in the present disclosure, a foaming agent generally used for an adhesive layer of a foaming adhesive sheet may be used. Also, the foaming agent may be a foaming agent wherein a foaming reaction occurs by heat, and may be a foaming agent wherein a foaming reaction occurs by light.

It is preferable that foaming start temperature of the foaming agent is softening temperature or more of the base resin of the curable adhesive agent such as the epoxy resin and also, activation temperature or less of the curing reaction of the base resin of the curable adhesive agent such as the epoxy resin. Foaming start temperature of the foaming agent is, for example, 70°C or more, and may be 100°C or more. When the foaming start temperature is too low, there is a possibility that the reaction may be started early, and foaming may occur in a condition where the flexibility and fluidity of the resin component are low, and uniform foaming may hardly occur. Meanwhile, the foaming start temperature of the foaming agent is, for example, 210°C or less. When the reaction start temperature is too high, there is a possibility that the resin component may be deteriorated.

The softening temperature of the main agent of the curable adhesive agent such as the epoxy resin may be measured using the ring and ball type softening temperature testing method specified in JIS K7234.

Examples of the foaming agent may include a microcapsule type foaming agent. It is preferable that the microcapsule type foaming agent includes a thermal expansion agent such as a hydrocarbon as a core, and a resin such as an acrylonitrile copolymer as a shell.

Also, as the foaming agent, for example, an organic based foaming agent and an inorganic based foaming agent may be used. Examples of the organic based foaming agent may include azo foaming agents such as azodicarbonamide (ADCA), azobisformamide, and azobisisobutyronitrile; a fluorinated alkane based foaming agents such as trichloromonofluoromethane; a hydrazine based foaming agents such as paratoluenesulfonylhydrazide; a semicarbazide based foaming agents such as p-toluenesulfonylsemicarbazide; a triazole based foaming agent such as 5-morpholyl-1,2,3,4-thiatriazole; and N-nitroso based foaming agents such as a N,N-dinitrosoterephthalamide. Meanwhile, examples of the inorganic based foaming agent may include ammonium carbonate, ammonium hydrogencarbonate, ammonium nitrite, ammonium borohydride, and azides.

The average particle size of the foaming agent may be, for example, 10 um or more, may be 13 um or more, and may be 17 um or more. When the average particle size of the foaming agent is in the above range, the static friction coefficient of the first adhesive layer surface may be decreased so that the slippage of the first adhesive layer may be excellent. Also, the average particle size of the foaming agent is preferably the thickness of the first adhesive layer or less,

may be, for example 44 um or less, may be 30 um or less, and may be 24 um or less.

Incidentally, the average particle size of the foaming agent is a particle size at integrated value of 50% in the particle size distribution determined by a laser diffraction scattering method. Also, when measuring the average particle size of the foaming agent, the foaming agent is separated by dissolving the first adhesive layer in a solvent. The solvent is not particularly limited as long as the solvent is capable of dissolving the components other than the foaming agent included in the first adhesive layer, and is appropriately selected according to the type, for example, of the curable adhesive agent included in the first adhesive layer. For example, a solvent used for an adhesive composition used to form the first adhesive layer may be used. Specifically, methyl ethyl ketone, ethyl acetate, toluene and the like may be used.

The content of the foaming agent when the resin component included in the first adhesive layer is regarded as 100 mass parts is, for example, 0.5 mass parts or more, may be 2 mass parts or more, may be 3 mass parts or more, may be 4 mass parts or more, and may be 5 mass parts or more. Meanwhile, the content of the foaming agent when the resin component included in the first adhesive layer is regarded as 100 mass parts is, for example, 25 mass parts or less, may be 20 mass parts or less, and may be 15 mass parts or less. When the content of the foaming agent is too little, there is a possibility that the static friction coefficient of the first adhesive layer surface may be increased. Also, when the content of the foaming agent is too much, since the content of the curable adhesive agent is relatively decreased, the adhesion after foamed and cured may be deteriorated.

(c) Other component

For example, when the curable adhesive agent is the epoxy resin based adhesive agent, the first adhesive layer in the present disclosure may include only the epoxy resin and the acrylic resin as the resin component, and may further include additional resin. Examples of the additional resin may include a urethane resin.

The proportion of the total of the first epoxy resin, the second epoxy resin and the acrylic resin with respect to the resin components included in the first adhesive layer is, for example, 70 mass% or more, may be 80 mass% or more, may be 90 mass% or more, and may be 100 mass%.

The content of the resin components included in the first adhesive layer is, for example, 60 mass% or more, may be 70 mass% or more, may be 80 mass% or more, and may be 90 mass% or more.

The first adhesive layer may include, if necessary, for example, additives such as a silane coupling agent, a filler, an antioxidant, a light stabilizer, an ultraviolet absorber, a lubricant, a plasticizer, an antistatic agent, a cross-linking agent, and a colorant. Examples of the silane coupling agent may include an epoxy based silane coupling agent. Examples of the filler may include inorganic fillers such as calcium carbonate, aluminum hydroxide, magnesium hydroxide, antimony trioxide, zinc borate, molybdenum compounds, and titanium dioxide. Examples of the antioxidant may include a phenol based antioxidant and a sulfur based antioxidant.

(2) Constitution of first adhesive layer

The thickness of the first adhesive layer is not particularly limited, and it is preferably average particle size of the foaming agent or more, for example, is 10 um or more, may be 15 um or more, and may be 20 um or more. When the first adhesive layer is too thin, the close adhesion with respect to the substrate and the adhesion after foamed and cured may not be sufficiently obtained. Meanwhile, the thickness of the first adhesive layer is, for example, 200 um or less, may be 150 um or less, and may be 100 um or less. When the first adhesive layer is too thick, the quality of the surface may be deteriorated.

The first adhesive layer may be a continuous layer, and may be a discontinuous layer. Example of the discontinuous layer may include patterns such as stripes and dots. Also, the surface of the first adhesive layer may have a concavo-convex shape such as emboss.

The first adhesive layer may be formed, for example, by applying an adhesive composition including the curable adhesive agent, the foaming agent and the like, and removing a solvent. Examples of application methods may include roll coating, reverse roll coating, transfer roll coating, gravure coating, gravure reverse coating, comma coating, rod coating, blade coating, bar coating, wire bar coating, die coating, lip coating, and dip coating.

The adhesive composition may include a solvent and may not include a solvent. Incidentally, the solvent in the present descriptions is in a broad sense including not only a strict solvent (a solvent for dissolving a solute) but also a dispersion medium. Also, the solvent included in the adhesive composition is volatilized and removed when the adhesive composition is applied and dried to form an adhesive layer.

The adhesive composition may be obtained by mixing each of the above described components and kneading and dispersing them, if necessary. As the mixing and dispersing methods, common kneading dispersers such as twin roll mills, triple roll mills, pebble mills, trommels, Szegvari attritors, high-speed impeller dispersers, high-speed stone mills, high-speed impact mills, Despar, high-speed mixers, ribbon blenders, cokneaders, intensive mixers, tumblers, blenders, dispersers, homogenizers, and ultrasonic dispersers, can be applied.

3. Second adhesive layer

(1) Materials of second adhesive layer

The second adhesive layer in the present disclosure contains a curable adhesive agent, and does not contain a foaming agent.

(a) Curable adhesive agent

The curable adhesive agent included in the second adhesive layer in the present disclosure may be the same as the curable adhesive agent used for the first adhesive layer. The curable adhesive agent used for the first adhesive layer and the curable adhesive agent included in the second adhesive layer may be the same and may be different.

(b) Foaming agent

The second adhesive layer in the present disclosure does not contain a foaming agent. Here, the second adhesive layer does not contain the foaming agent means that the content of the foaming agent in the second adhesive layer is 2.0 mass% or less. The content of the foaming agent in the second adhesive layer is preferably 1.0 mass% or less, and more preferably 0 mass%.

(c) Other component

The other component included in the second adhesive layer in the present disclosure may be the same as the other component included in the first adhesive layer.

(2) Constitution of second adhesive layer

The thickness of the second adhesive layer may be the same as the thickness of the first adhesive layer.
The second adhesive layer may be a continuous layer, and may be a discontinuous layer. Also, the surface of the second adhesive layer may have a concavo-convex shape such as emboss.
The method for forming the second adhesive layer may be the same as the method for forming the first adhesive layer.

4. Substrate

The foaming adhesive sheet in the present disclosure may include a substrate between the first adhesive layer and the second adhesive layer. When the substrate is disposed between the first adhesive layer and the second adhesive layer, the insulation of the foaming adhesive sheet may be improved, and the handling property and workability of the foaming adhesive sheet may be improved. Meanwhile, when the substrate is not disposed between the first adhesive layer and the second adhesive layer, the overall thickness of the foaming adhesive sheet may be decreased, and the foaming adhesive sheet can be inserted into a narrow space.
The substrate preferably has an insulating property. Also, it is preferable that the substrate is in a sheet form. The substrate may have a single layer structure, and may have a multiple layer structure. Also, the substrate may or may not have a porous structure inside.
Examples of the substrate may include a resin substrate and a nonwoven fabric.
Examples of the resin included in the resin substrate may include polyester resins such as polyethylene terephthalate (PET), polybutylene terephthalate, polyethylene naphthalate (PEN), and aromatic polyesters; polycarbonates; polyarylates; polyurethanes; polyamide resins such as polyamides, and polyetheramides; polyimide resins such as polyimides, polyetherimides, and polyamideimides; polysulfone resins such as polysulfones, and polyethersulfones; polyetherketone resins such as polyetherketones, and polyether ether ketones; polyphenylene sulfides (PPS); and modified polyphenylene oxides. The glass transition temperature of the resin is, for example, 80°C or more, may be 140°C or more, and may be 200°C or more. Also, a liquid crystal polymer (LCP) may be used as the resin.
Examples of the nonwoven fabric may include nonwoven fabrics including fibers such as cellulose fibers, polyester fibers, nylon fibers, aramid fibers, polyphenylene sulfide fibers, liquid crystal polymer fibers, glass fibers, metal fibers, and carbon fibers.
In order to improve the close adhesion with respect to the first adhesive layer and the second adhesive layer, the surface of the substrate may be subjected to a surface treatment.
The thickness of the substrate is not particularly limited, and is, for example, 2 um or more, may be 5 um or more,

and may be 9 um or more. Also, the thickness of the substrate is, for example, 200 um or less, may be 100 um or less, and may be 50 um or less.

5. Other constitution

(1) First intermediate layer and second intermediate layer

The foaming adhesive sheet in the present disclosure may include a first intermediate layer between the substrate and the first adhesive layer. Also, the foaming adhesive sheet in the present disclosure may include a second intermediate layer between the substrate and the second adhesive layer. By disposing the first intermediate layer and the second intermediate layer, the close adhesion of the first adhesive layer and the second adhesive layer with respect to the substrate may further be improved. Further, by disposing the first intermediate layer and the second intermediate layer, for example, the stress applied to a bent portion when the foaming adhesive sheet is bent may be eased, or the stress applied to a cut portion when the foaming adhesive sheet is cut may be eased. As the result, lifting off or peeling off of the first adhesive layer and the second adhesive layer from the substrate may be suppressed when the foaming adhesive sheet is bent or cut.

For example, in the foaming adhesive sheet 10 shown in FIG. 6, first intermediate layer 4 is disposed between the substrate 3 and the first adhesive layer 1, and second intermediate layer 5 is disposed between the substrate 3 and the second adhesive layer 2. Incidentally, in FIG. 6, although the foaming adhesive sheet 10 includes both of the first intermediate layer 4 and the second intermediate layer 5, only either one may be included.

The foaming adhesive sheet may include at least one of the first intermediate layer and the second intermediate layer, and for example, only the first intermediate layer disposed between the substrate and the first adhesive layer may be included, only the second intermediate layer disposed between the substrate and the second adhesive layer may be included, and both of the first intermediate layer disposed between the substrate and the first adhesive layer, and the second intermediate layer disposed between the substrate and the second adhesive layer may be included. Above all, it is preferable that the first intermediate layer is disposed between the substrate and the first adhesive layer, and the second intermediate layer is disposed between the substrate and the second adhesive layer.

Materials included in the first intermediate layer and the second intermediate layer are not particularly limited as long as the materials are capable of improving the close adhesion of the substrate and the first adhesive layer and the second adhesive layer, and capable of releasing the stress, and the materials are appropriately selected according to the material and the like of the substrate, the first adhesive layer and the second adhesive layer. Examples thereof may include polyester, polyvinyl chloride, polyvinyl acetate, polyurethane, a polymer obtained by copolymerizing at least 2 kinds or more of them, cross-linked material thereof, and mixture thereof.

The cross-linked material is a cross-linked material wherein the resin described above is cross-linked by a curing agent. Examples of the curing agent may include an isocyanate based curing agent. Also, for example, when reactive group/NCO equivalent is regarded as 1, the isocyanate based curing agent is preferably added at proportion of 0.5 mass% or more and may be 20 mass% or less, with respect to the resin.

Among the above, the first intermediate layer and the second intermediate layer preferably include a cross-linked resin. Incidentally, the cross-linked resin means those not fused at high temperature. Thereby, the adhesive force under high temperature, that is, the heat resistance may be improved.

The thickness of the first intermediate layer and the second intermediate layer is respectively not particularly limited, and is, for example, 0.1 um or more, may be 0.5 um or more, and may be 1 um or more. When the first intermediate layer and the second intermediate layer are too thin, there is a possibility that sufficient effect of suppressing the peeling off of the first adhesive layer and the second adhesive layer from the substrate when the foaming adhesive sheet is bent or cut, may not be obtained. Meanwhile, the thickness of the first intermediate layer and the second intermediate layer is respectively, for example, 4 um or less, and may be 3.5 um or less. Since the heat resistance of the first intermediate layer and the second intermediate layer themselves is usually not high, when the first intermediate layer and the second intermediate layer are too thick, the heat resistance (adhesive strength under high temperature) may be degraded.

The first intermediate layer and the second intermediate layer may be formed, for example, by applying a resin composition and removing a solvent. Examples of application methods may include roll coating, reverse roll coating, transfer roll coating, gravure coating, gravure reverse coating, comma coating, rod coating, blade coating, bar coating, wire bar coating, die coating, lip coating, and dip coating.

(2) First separator and second separator

The foaming adhesive sheet in the present disclosure may include a separator on a surface of the first adhesive layer that is opposite side to the second adhesive layer. Also, the foaming adhesive sheet in the present disclosure may include a second separator on a surface of the second adhesive layer that is opposite side to the first adhesive layer.

The first separator and the second separator are not particularly limited as long as they may be peeled off from the first adhesive layer and the second adhesive layer, and may have a strength to the extent capable of protecting the first adhesive layer and the second adhesive layer. Examples of such first separator and second separator may include a releasing film, and a releasing paper. Also, the first separator and the second separator may have a single layer structure, and may have a multiple layer structure.

Examples of the separator having a single layer structure may include a fluorine resin based film.

Also, Examples of the separator having a multiple layer structure may include a stacked body including a releasing layer on one surface or both surfaces of a substrate layer. Examples of the substrate layer may include resin films such as polypropylene, polyethylene, and polyethylene terephthalate; and paper such as high-quality paper, coated paper, and impregnated paper. The material of the releasing layer is not particularly limited as long as it has releasing property, and examples may include a silicone compound, an organic compound modified silicone compound, a fluorine compound, an amino-alkyd compound, a melamine compound, an acrylic compound, a polyester compound, and a long-chain alkyl compound. Any one of an emulsion type, a solvent type, and a solventless type of these compounds may be used.

6. Foaming adhesive sheet

The thickness of the foaming adhesive sheet in the present disclosure is, for example, 10 um or more, and may be 20 um or more. Meanwhile, the thickness of the foaming adhesive sheet is, for example, 1000 um or less, and may be 200 um or less.

The foaming adhesive sheet in the present disclosure is disposed between the first member and the second member and used for adhering the first member and the second member, when the distance G2 of the space after disposing the foaming adhesive sheet between the first member and the second member is in the specified range.

The method for producing the foaming adhesive sheet in the present disclosure is not particularly limited, and appropriately selected depending on the layer structure of the foaming adhesive sheet.

B. Method for producing a product

The method for producing a product in the present disclosure includes: a disposing step of disposing the foaming adhesive sheet described above between a first member and a second member; and an adhering step of adhering the first member and the second member by foaming and curing the foaming adhesive sheet.

FIGS. 2A and 2B, FIGS. 4A and 4B, and FIGS 5A to 5D are respectively process diagrams exemplifying the method for producing a product in the present disclosure. About FIGS. 2A and 2B, FIGS. 4A and 4B, and FIGS 5A to 5D, it is described in the section "A. Foaming adhesive sheet" above; thus, the descriptions herein are omitted.

The method for producing a product in the present disclosure will be hereinafter explained.

1. Foaming adhesive sheet

In the method for producing a product in the present disclosure, as a foaming adhesive sheet, the foaming adhesive sheet described above is used.

When the foaming adhesive sheet includes a first separator and a second separator, the first separator and the second separator are peeled off from the foaming adhesive sheet at the time of disposing the foaming adhesive sheet between the first member and the second member.

Incidentally, the details of the foaming adhesive sheet are described in the section "A. Foaming adhesive sheet" above; thus, the description herein is omitted.

2. Disposing step

In the disposing step in the present disclosure, a method for disposing the foaming adhesive sheet between the first member and the second member is appropriately selected according to the type of the first member and the second member. Examples of the method may include a method wherein the foaming adhesive sheet is disposed on one member among the first member and the second member, and the other member is disposed on the foaming adhesive sheet, on the opposite side to the one member; a method wherein the foaming adhesive sheet is inserted in a space between the first member and the second member; a method wherein, after disposing the foaming adhesive sheet in a hole, groove and so on of the first member, the second member is inserted into the space after disposing the foaming adhesive sheet in a hole, groove and so on of the first member.

The first member and the second member are appropriately selected according to the use application and so on of the product. The first member and the second member are preferably those required to be adhered and insulated.

Examples thereof may include motor parts. Specific examples thereof may include a coil and a stator in the motor.

3. Adhering step

In the adhering step in the present disclosure, examples of a method for foaming and curing the foaming adhesive sheet may include a heating and a light irradiation. Among them, the foaming adhesive sheet is preferably foamed and cured by heating. The method by heating may be applied even when the first member and the second member are not transparent, such as a metal member.

The heating conditions are appropriately set according to, for example, the type of the curable adhesive agent and foaming agent included in the first adhesive layer and the second adhesive layer, and the type of the substrate. The heating temperature may be, for example, 130°C or more, and 200°C or less. Also, the heating time may be, for example, 3 minutes or more and 3 hours or less.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Examples 1 to 14 and Comparative Examples 1 to 2]

Firstly, adhesive compositions 1 to 2 having the compositions shown in Table 1 below were prepared by using the materials below.

- Acrylic resin: PMMA-PBuA-PMMA (partially acrylamide group), Tg: -20°C, 120°C, Mw: 150,000
- Epoxy resin A: bisphenol A novolac type, solid at ordinary temperature, softening temperature: 70°C, epoxy equivalent: 210 g/eq, Mw: 1300, melt viscosity at 150°C: 0.5 Pa·s
- Epoxy resin B: BPA phnoxy type, solid at ordinary temperature, softening temperature: 110°C, epoxy equivalent: 8000 g/eq, Mw: 50,000
- Curing agent 1: Phenol-based curing agent, α-(hydroxy (or dihydroxy)phenylmethyl)-w-hydropoly[biphenyl-4,4'-diylmethylene(hydroxy (or dihydroxy)phenylenemethylene)]
- Curing agent 2: Imidazole-based compound, 2-phenyl-4,5-dihydroxymethylimidazole, average particle size: 3 um, melting point: 230°C, reaction start temperature: 145°C-155°C, active region: 155°C -173°C (2PHZ-PW from Shikoku Chemicals Corporation)
- Curing agent 3: Dicyandiamide, particle size: 10 um or less, melting point: 209°C, (DYHARD100SH from Evonik Degussa Industries)
  (Note that the curing agent 2 also works as a curing accelerator.)
- Heat foaming agent: thermally expandable microcapsule, average particle size: 10 to 16 μm, expansion start temperature: 123 to 133°C, maximum expansion temperature: 168 to 178°C, core: hydrocarbon, shell: thermoplastic polymer
- Solvent: methyl ethyl ketone

[Table 1]

| | | Adhesive composition 1 | Adhesive composition 2 |
|---|---|---|---|
| Composition (mass parts) | Acrylic resin | 13 | 13 |
| | Epoxy resin A | 40 | 40 |
| | Epoxy resin B | 42 | 42 |
| | Curing agent 1 | 6 | 6 |
| | Curing agent 2 | 8 | 8 |
| | Curing agent 3 | 3.3 | 3.3 |
| | Heat foaming agent | 13.5 | - |
| | Solvent | 67 | 60 |

(continued)

| | Adhesive composition 1 | Adhesive composition 2 |
|---|---|---|
| Solid concentration (%) | 65.25 | 65.18 |

As a substrate, polyethylene naphthalate films with high insulation (PEN film, thickness: 25 um, 50 um, 75 μm, 100 μm) were prepared. Also, to 100 mass parts of a polyester polymer, a curing agent (polyisocyanate) was compounded at the proportion of 15 mass parts, and a catalyst (trisdimethylaminomethyl phenol) was compounded at the proportion of 0.3 mass parts, further diluted with methyl ethyl ketone (MEK) so that the solid content was 15 mass%, to prepare a resin composition. The resin composition was applied to one surface of the substrate by a bar coater, dried for 1 minute at 100°C in an oven to form a first intermediate layer having thickness of 2 um. Further, a second intermediate layer was formed, similarly as the first intermediate layer, on the other surface of the substrate.

Next, the adhesive composition 1 was applied to the surface of the first intermediate layer, that is opposite to the substrate, using an applicator so that a thickness after application was 45 um. After that, it was dried for 3 minutes at 100°C in an oven to form a first adhesive layer. Further, using the adhesive composition 2, a second adhesive layer was formed, similarly as the first adhesive layer, on the surface of the second intermediate layer, that is opposite to the substrate. Thereby, obtained was a foaming adhesive sheet wherein the first adhesive layer, the first intermediate layer, the substrate, the second intermediate layer, and the second adhesive layer were disposed in this order.

[Evaluation]

<Foaming ratio E>

About the foaming adhesive sheet before foamed and cured, thickness T1 of the first adhesive layer, and thickness T2 that is from a surface of the first adhesive layer opposing to the second adhesive layer to a surface of the second adhesive layer opposing to the first adhesive layer, were measured using a digimatic thickness gage 547-401 from Mitutoyo Corporation.

As shown in FIG7, two metal plates 31 (cold-rolled steel plate SPCC-SD) with thickness of 1.6 mm, width of 25 mm, length of 100 mm, were prepared. Spacers 32 were disposed with a predetermined space on one tip end of one of the metal plates 31. The thickness of the spacer 32 was 400 um (thickness of Kapton pressure-sensitive adhesive tapes plurally layered). Note that the thickness of the spacer 32 corresponds to a distance between the two metal plates 31, that is, the distance G1 between the first member and the second member. Then, the foaming adhesive sheet 10 was cut out into the size of 12.5 mm * 25 mm, and when the foaming adhesive sheet included the separator, the foaming adhesive sheet 10 was disposed between the spacers 32 in the state the first separator and the second separator were peeled off, and the other metal plate 31 was disposed so that one tip end overlapped, fixed by a clip, and thereby a test piece was obtained. After that, the test piece was put in a hot oven, heated at 180°C for 30 minutes, and the foaming adhesive sheet 10 was foamed and cured. Note that all the foaming adhesive sheets in Examples 1 to 14 and Comparative Examples 1 to 2 were foamed by heating until a thickness that is from a surface of the first adhesive layer opposing to the second adhesive layer to a surface of the second adhesive layer opposing to the first adhesive layer became the thickness of the spacer 32 (distance G1 between the first member and the second member).

Then, the foaming ratio E was calculated based on the equation (1).

<Tack of fist adhesive layer and second adhesive layer>

About the tack of the first adhesive layer, a tacking test machine "TAC-II" from RHESCA was used, and a cylindrical probe made of stainless having a diameter of 5 mm was pushed against a surface of the first adhesive layer of the foaming adhesive sheet at a load of 10.0 gf and speed of 30 mm/min, and kept for 1.0 second in the condition of 25°C, then peeled off at the speed of 30 mm/min, and the load at the time of peeling off was measured. This measurement was performed for five times, and the average value was determined as the tack.

The tack of the second adhesive layer was measured similarly to the tack of the first adhesive layer.

<Adhesion after foaming and curing>

The test piece was produced in the same manner as the evaluation of the foaming ratio E, and the test piece was heated at 180°C for 30 minutes so that the foaming adhesive sheet was cured.

The shear adhesive strength (adhesive strength) of the test piece after the heating was measured by a tensile test machine Tensilon RTF1350 (from A & D Company, Ltd.) in accordance with JIS K6850. The measurement conditions were

tensile speed of 10 mm/min, and temperature of 23°C. After the measurement of the adhesive strength, the fracture surface of the test piece was visually observed, and the fracture in the first adhesive layer and the fracture in the second adhesive layer were determined as the cohesion failure, and thereby the cohesive failure rate was calculated. The cohesive failure rate is the ratio of the area of the cohesion failure portion with respect to the total adhesion area. The measurement of the adhesive strength was performed for three times, and the average value was determined as the cohesive failure rate. The cohesive failure rate was evaluated based on the below.

A: cohesive failure rate was 25% or more.
B: cohesive failure rate was less than 25%.

[Table 2]

| | Ex. 1 | Ex. 2 | Ex. 3 | Ex. 4 | Ex. 5 | Ex. 6 | Ex. 7 | Ex. 8 | Comp. Ex. 1 | Ex. 9 | Ex. 10 | Ex. 11 | Comp. Ex. 2 | Ex. 12 | Ex. 13 | Ex. 14 |
|---|---|---|---|---|---|---|---|---|---|---|---|---|---|---|---|---|
| Thickness of first adhesive layer T1($\mu$m) | 30 | 45 | 60 | 75 | 30 | 45 | 60 | 75 | 30 | 45 | 60 | 75 | 30 | 45 | 60 | 75 |
| Thickness of substrate T3($\mu$m) | 100 | 100 | 100 | 100 | 75 | 75 | 75 | 75 | 50 | 50 | 50 | 50 | 25 | 25 | 25 | 25 |
| Thickness of second adhesive layer T4($\mu$m) | 60 | 45 | 30 | 15 | 60 | 45 | 30 | 15 | 60 | 45 | 30 | 15 | 60 | 45 | 30 | 15 |
| T2=T1+T3+T4 ($\mu$m) | 190 | 190 | 190 | 190 | 165 | 165 | 165 | 165 | 140 | 140 | 140 | 140 | 115 | 115 | 115 | 115 |
| Distance between first member and second member G1($\mu$m) | 400 | 400 | 400 | 400 | 400 | 400 | 400 | 400 | 400 | 400 | 400 | 400 | 400 | 400 | 400 | 400 |
| G2=G1-T2 ($\mu$m) | 210 | 210 | 210 | 210 | 235 | 235 | 235 | 235 | 260 | 260 | 260 | 260 | 285 | 285 | 285 | 285 |
| Foaming ratio E=(G1-T2)/T1 | 7.00 | 4.67 | 3.50 | 2.80 | 7.83 | 5.22 | 3.92 | 3.13 | 8.67 | 5.78 | 4.33 | 3.47 | 9.50 | 6.33 | 4.75 | 3.80 |
| Tack of first adhesive layer (gf) | 0 | 0 | 0 | 0 | 0 | 0 | 0 | 0 | 0 | 0 | 0 | 0 | 0 | 0 | 0 | 0 |
| Tack of second adhesive layer (gf) | 0 | 0 | 0 | 0 | 0 | 0 | 0 | 0 | 0 | 0 | 0 | 0 | 0 | 0 | 0 | 0 |
| Cohesive failure rate | A | A | A | A | A | A | A | A | B | A | A | A | B | A | A | A |

In the foaming adhesive sheet of Examples 1 to 14, the tack of the first adhesive layer and the tack of the second adhesive layer were respectively in the specified range, and the thickness of the first adhesive layer and the thickness which is from a surface of the first adhesive layer opposing to the second adhesive layer to a surface of the second adhesive layer opposing to the first adhesive layer were set so that the foaming ratio E represented by the formula (1) was in the above range, and thus the cohesive failure rate was high. Thereby, it showed that the unevenness of the adhesive strength was small, and the reliability was high. Meanwhile, in the foaming adhesive sheet of Comparative Examples 1 to 2, the foaming ratio E was higher than the specified range, and thus the cohesive failure rate was low. This is considered that, when the foaming ratio E is too high, the void of the first adhesive layer after foamed and cured became high and the unevenness of the adhesive strength increased, and thus the interfacial fracture easily occurred.

In the present disclosure, for example, below inventions are provided:

[1] A foaming adhesive sheet that is disposed between a first member and a second member, and is used for adhering the first member and the second member, the foaming adhesive sheet comprising:

a first adhesive layer containing a curable adhesive agent and a foaming agent, and a second adhesive layer that is disposed on one surface side of the first adhesive layer, contains a curable adhesive agent, and does not contain a foaming agent, wherein

a tack of the fist adhesive layer and the second adhesive layer is 0 gf or more and less than 10 gf; and when the foaming adhesive sheet is foamed and cured so that a thickness, which is from a surface of the first adhesive layer opposing to the second adhesive layer to a surface of the second adhesive layer opposing to the first adhesive layer, becomes a distance between the first member and the second member, a thickness of the first adhesive layer and the thickness, which is from the surface of the first adhesive layer opposing to the second adhesive layer to the surface of the second adhesive layer opposing to the first adhesive layer, are set so that a foaming ratio E represented by the below equation (1) is over 1.0 and 8.5 or less:

$$E = (G1 - T2) / T1 \qquad (1).$$

(In the equation (1), E represents a foaming ratio, G1 represents the distance between the first member and the second member, T1 represents a thickness of the first adhesive layer before foamed and cured, T2 represents a thickness, which is from the surface of the first adhesive layer opposing to the second adhesive layer to the surface of the second adhesive layer opposing to the first adhesive layer, before foamed and cured.)

[2] The foaming adhesive sheet according to [1], wherein a static friction coefficient of the surface of the first adhesive layer opposing to the second adhesive layer is smaller than a static friction coefficient of the surface of the second adhesive layer opposing to the first adhesive layer.

[3] The foaming adhesive sheet according to [1] or [2], wherein a cohesive failure rate, when a tensile shear adhesive strength is measured in accordance with JIS K6850, is 25% or more.

[4] The foaming adhesive sheet according to any one of [1] to [3], further comprising a substrate between the first adhesive layer and the second adhesive layer.

[5] A method for producing a product, the method comprising:

a disposing step of disposing the foaming adhesive sheet according to any one of [1] to [4] between a first member and a second member; and

an adhering step of adhering the first member and the second member by foaming and curing the foaming adhesive sheet.

Reference Signs List

1 first adhesive layer
2 second adhesive layer
3 substrate
4 first intermediate layer
5 second intermediate layer
10 foaming adhesive sheet
15 adhesive sheet after formed and cured
20a first member
20b second member

100 product
S1 surface of first adhesive layer opposing to second adhesive layer
S2 surface of second adhesive layer opposing to first adhesive layer
T1 thickness of first adhesive layer
T2 thickness, which is from surface of first adhesive layer opposing to second adhesive layer to surface of second adhesive layer opposing to first adhesive layer
G1 distance between first member and second member

## Claims

1. A foaming adhesive sheet that is disposed between a first member and a second member, and is used for adhering the first member and the second member, the foaming adhesive sheet comprising:

   a first adhesive layer containing a curable adhesive agent and a foaming agent, and a second adhesive layer that is disposed on one surface side of the first adhesive layer, contains a curable adhesive agent, and does not contain a foaming agent, wherein
   a tack of the fist adhesive layer and the second adhesive layer is 0 gf or more and less than 10 gf; and
   when the foaming adhesive sheet is foamed and cured so that a thickness, which is from a surface of the first adhesive layer opposing to the second adhesive layer to a surface of the second adhesive layer opposing to the first adhesive layer, becomes a distance between the first member and the second member, a thickness of the first adhesive layer and the thickness, which is from the surface of the first adhesive layer opposing to the second adhesive layer to the surface of the second adhesive layer opposing to the first adhesive layer, are set so that a foaming ratio E represented by the below equation (1) is over 1.0 and 8.5 or less:

   $$E = (G1 - T2) / T1 \qquad (1).$$

   (In the equation (1), E represents a foaming ratio, G1 represents the distance between the first member and the second member, T1 represents a thickness of the first adhesive layer before foamed and cured, T2 represents a thickness, which is from the surface of the first adhesive layer opposing to the second adhesive layer to the surface of the second adhesive layer opposing to the first adhesive layer, before foamed and cured.)

2. The foaming adhesive sheet according to claim 1, wherein a static friction coefficient of the surface of the first adhesive layer opposing to the second adhesive layer is smaller than a static friction coefficient of the surface of the second adhesive layer opposing to the first adhesive layer.

3. The foaming adhesive sheet according to claim 1 or 2, wherein a cohesive failure rate, when a tensile shear adhesive strength is measured in accordance with JIS K6850, is 25% or more.

4. The foaming adhesive sheet according to claim 1 or 2, further comprising a substrate between the first adhesive layer and the second adhesive layer.

5. A method for producing a product, the method comprising:

   a disposing step of disposing the foaming adhesive sheet according to claim 1 or 2 between a first member and a second member; and
   an adhering step of adhering the first member and the second member by foaming and curing the foaming adhesive sheet.

FIG. 1

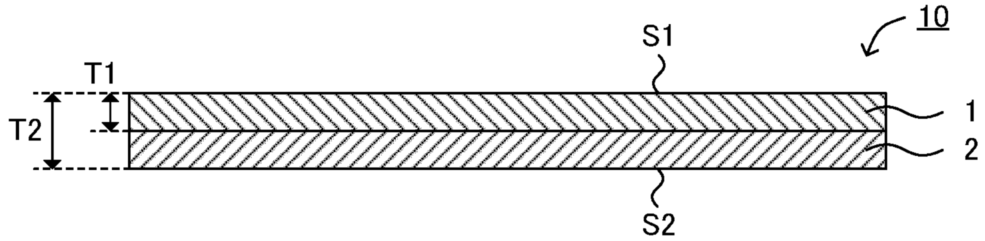


FIG. 2A

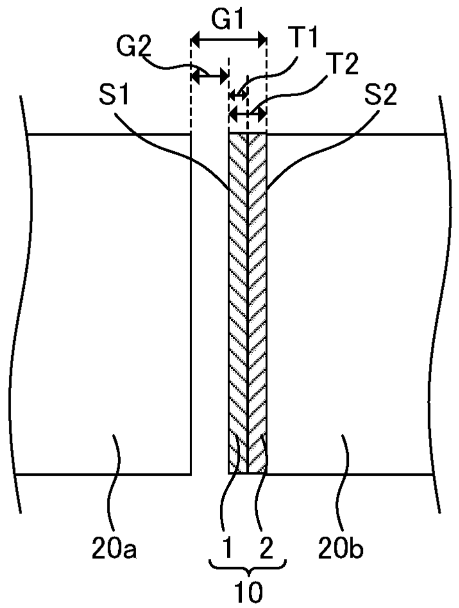


FIG. 2B

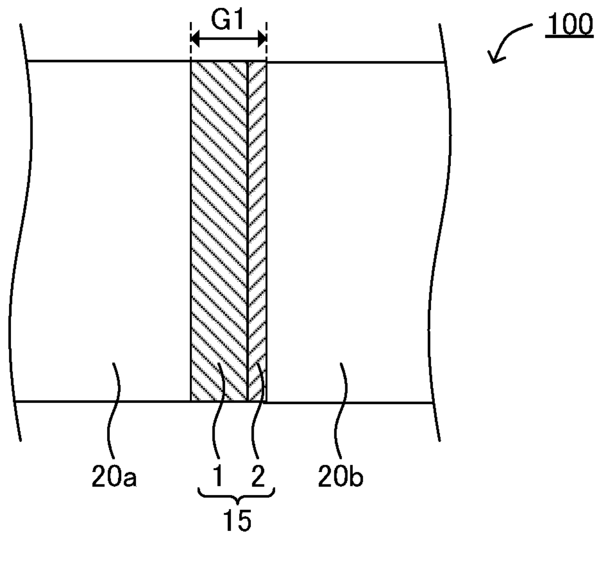

FIG. 3

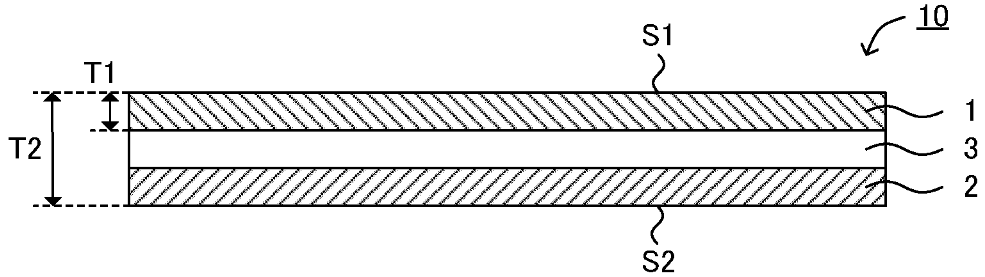


FIG. 4A

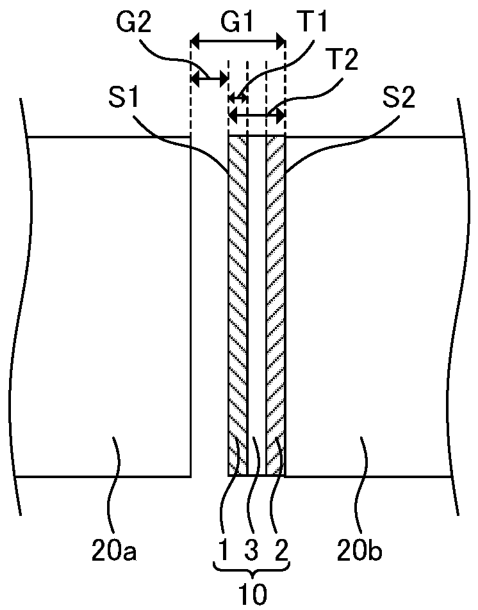


FIG. 4B

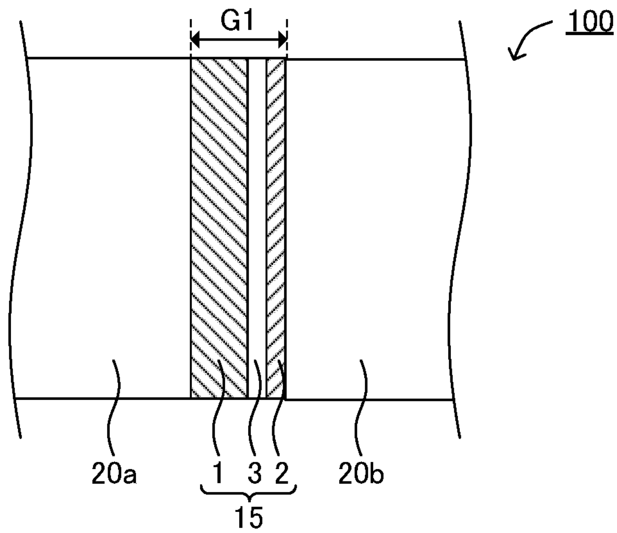

FIG. 5A

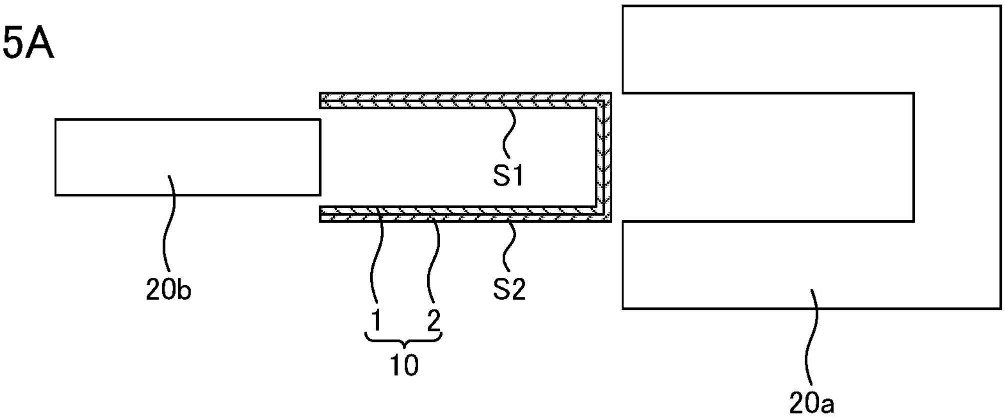


FIG. 5B

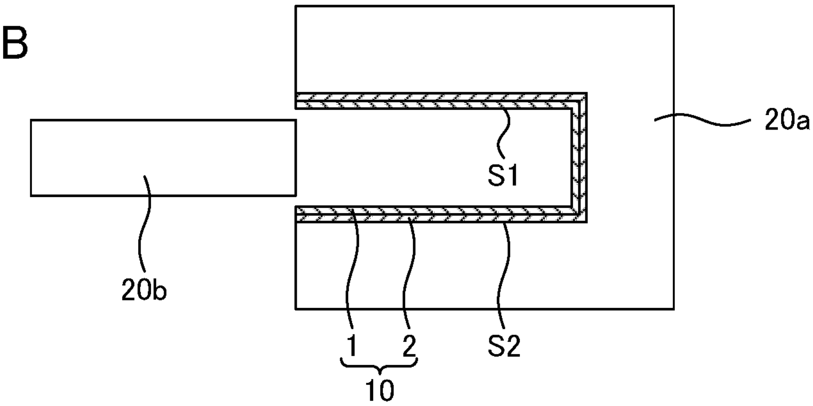


FIG. 5C

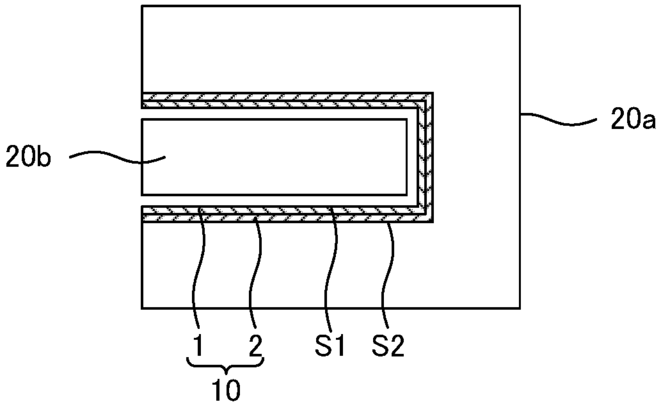


FIG. 5D

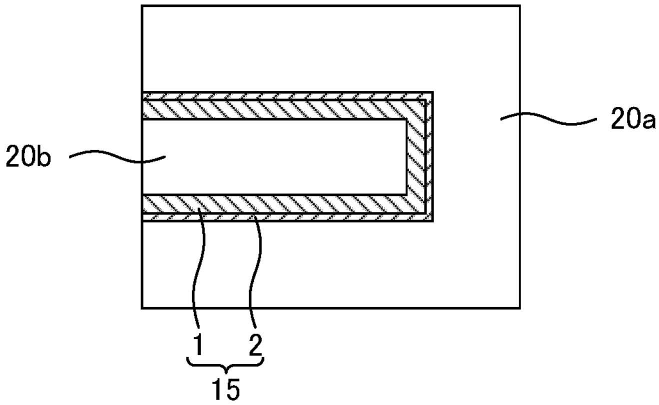

FIG. 6

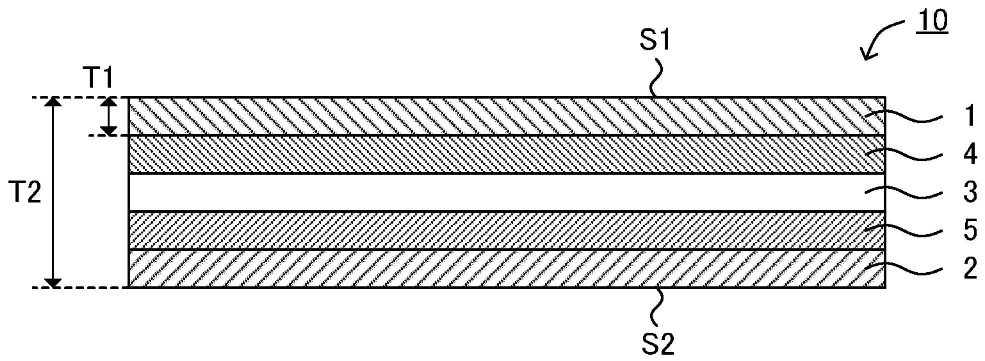

FIG. 7

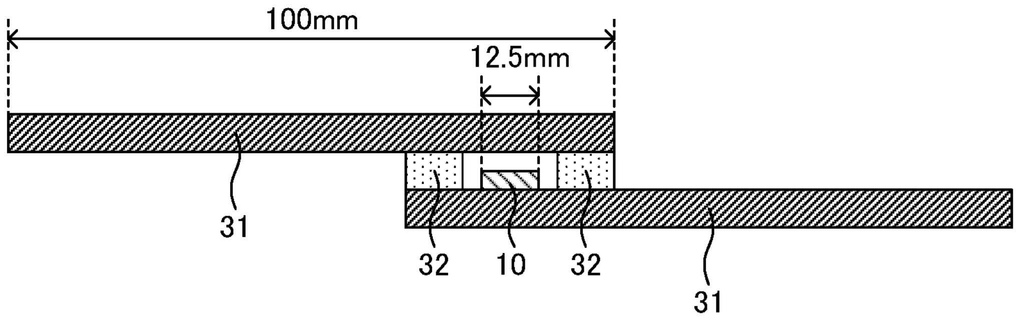

**INTERNATIONAL SEARCH REPORT**

International application No.
**PCT/JP2023/000950**

**A. CLASSIFICATION OF SUBJECT MATTER**

***C09J 7/30***(2018.01)i; ***B32B 27/00***(2006.01)i; ***C09J 5/08***(2006.01)i; ***C09J 11/06***(2006.01)i; ***C09J 201/00***(2006.01)i
FI: C09J7/30; C09J201/00; C09J11/06; C09J5/08; B32B27/00 D

According to International Patent Classification (IPC) or to both national classification and IPC

**B. FIELDS SEARCHED**

Minimum documentation searched (classification system followed by classification symbols)

C09J1/00-201/10; B32B27/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-052950 A (DAINIPPON INK & CHEMICALS) 16 March 2017 (2017-03-16) claim 5, paragraphs [0010], [0021], [0029]-[0030], [0044], [0062]-[0071], [0096]-[0099], tables 1-2, fig. 1 | 1-5 |
| Y | WO 2016/163514 A1 (TERAOKA SEISAKUSHO KK) 13 October 2016 (2016-10-13) claims 1-2, 25-27, paragraph [0055] | 1-5 |
| Y | JP 2021-155495 A (DAINIPPON PRINTING CO LTD) 07 October 2021 (2021-10-07) claims 1-13, paragraphs [0032], [0044]-[0045] | 1-5 |
| A | JP 2013-104044 A (3M INNOVATIVE PROPERTIES COMPANY) 30 May 2013 (2013-05-30) claims 1-7, paragraph [0043], table 2, examples 1-4, fig. 1-4 | 1-5 |
| A | WO 2021/059154 A1 (3M INNOVATIVE PROPERTIES COMPANY) 01 April 2021 (2021-04-01) claim 1, examples, tables 2-4 | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/000950**

| Patent document cited in search report | Publication date (day/month/year) | Patent family member(s) | Publication date (day/month/year) |
|---|---|---|---|
| JP 2017-052950 A | 16 March 2017 | WO 2015/190235 A1<br>CN 106459679 A | |
| WO 2016/163514 A1 | 13 October 2016 | US 2018/0134926 A1<br>claims 1-2, 25-27, paragraph [0068]<br>EP 3284793 A1<br>CN 106414640 A<br>KR 10-2017-0018094 A<br>TW 201641635 A<br>ES 2896801 T<br>PL 3284793 T<br>RS 62742 B | |
| JP 2021-155495 A | 07 October 2021 | WO 2021/193848 A1<br>CN 115348998 A<br>KR 10-2022-0156557 A | |
| JP 2013-104044 A | 30 May 2013 | (Family: none) | |
| WO 2021/059154 A1 | 01 April 2021 | EP 3798255 A1<br>CN 114423835 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6274540 B
- JP 2014065889 A


### Non-patent literature cited in the description


- POLYMERHANDBOOK. John Wiley & Sons, Ink.
- Polymer Handbook. WILEY INTERSCIENCE